# EUROPÄISCHE PATENTSCHRIFT

(11) **EP 4 112 356 B1**
(45) Veröffentlichungstag und Bekanntmachung des Hinweises auf die Patenterteilung: **06.11.2024**
(21) Anmeldenummer: 22178278.2
(22) Anmeldetag: 10.06.2022
(51) Int. Cl.: B60L 1/00, F16L 3/00, F16G 11/00, H02J 50/00, H01F 27/28, H01F 27/26, G01R 15/18, H01F 38/14, H01F 27/02, H05K 5/02, H02J 50/10, B61L 15/00, B60L 3/12

(54) **VORRICHTUNG ZUR ENERGIEVERSORGUNG EINER SENSOREINRICHTUNG IN EINEM SCHIENENFAHRZEUG**
DEVICE FOR SUPPLYING ENERGY TO A SENSOR DEVICE IN A RAIL VEHICLE
DISPOSITIF D'ALIMENTATION EN ÉNERGIE D'UN DISPOSITIF CAPTEUR DANS UN VÉHICULE FERROVIAIRE

(30) Priorität: 30.06.2021 DE 102021206825
(43) Veröffentlichungstag der Anmeldung: 04.01.2023
(73) Patentinhaber: Siemens Mobility GmbH, 81739 München (DE)
(72) Erfinder: Wokusch, Simon Matthias, 91058 Erlangen (DE); Götz, Jürgen, 91315 Höchstadt/Aisch (DE); Meierhöfer, Franz, 91241 Kirchensittenbach (DE)
(74) Vertreter: Siemens Patent Attorneys

(56) Entgegenhaltungen:
- WO-A1-2020/064274
- JP-A- 2003 072 484
- JP-A- 2019 124 515
- JP-B2- 5 149 256
- KR-A- 20100 043 834
- US-A1- 2010 253 318
- US-A1- 2012 203 481

## Beschreibung

Die Erfindung betrifft eine Vorrichtung zur Energieversorgung einer Sensoreinrichtung in einem Schienenfahrzeug. Ferner betrifft die Erfindung ein Schienenfahrzeug mit zumindest einer solchen Vorrichtung.

Aus der internationalen Patentanmeldung WO 2020/064274 A1 ist eine Vorrichtung zur Energieversorgung einer Sensoreinrichtung in einem Schienenfahrzeug bekannt. Dabei ist eine Spule mit einem elektrischen Leiter konzentrisch um ein Motorkabel, welches einen Wechselrichter mit einem Traktionsmotor des Schienenfahrzeugs verbindet, angeordnet. Eine an dem Motorkabel anliegende Wechselspannung erzeugt durch induktive Kopplung eine Wechselspannung in der Spule, welche der Energieversorgung der Sensoreinrichtung dient. Die Sensoreinrichtung umfasst dabei zumindest ein Schaltungsmodul, welches beispielsweise als eine integrierte Schaltung ausgestaltet ist und welches insbesondere einer Erfassung, Verarbeitung und Speicherung von Signalen bzw. Daten zumindest eines im Bereich einer Fahrzeugkomponente angeordneten Sensors, mittels welchem ein Zustand der Fahrzeugkomponente oder eines Teils dieser Komponente erfasst werden soll, dient. Solche mittels Sensoren überwachten Fahrzeugkomponenten sind beispielsweise ein Drehgestell des Schienenfahrzeugs sowie in dem Drehgestell angeordnete Traktionsmotoren und Getriebe, wobei insbesondere ein Zustand von Verschleißkomponenten wie Radsatz-, Motor- und Getriebelager bestimmt werden kann.

US 2010/253318 A1 offenbart ein Netzteil, welches einen Stromtransformator mit einem Kern umfasst, welcher einen ersten Abschnitt und einen zweiten Abschnitt aufweist. Der zweite Abschnitt ist so konfiguriert, dass er sich relativ zum ersten Abschnitt bewegt, um den Kern um eine Stromübertragungsleitung herum zu öffnen und zu schließen. Das Netzteil umfasst ferner eine Klemme zur Befestigung der Stromversorgung an der Stromübertragungsleitung, einen Stromsensor zum Messen des durch die Stromübertragungsleitung fließenden Stroms, einen elektrischen Ausgang und ein Gehäuse, das einen geschützten Hohlraum für eine oder mehrere elektrische Komponenten bietet, die mit dem elektrischen Ausgang verbunden sind. Das Netzteil umfasst auch Mittel zum Speichern elektrischer Energie, die von der Stromübertragungsleitung erhalten wird.

US 2012/203481 A1 zeigt einen Kabelmanager zum mechanischen Sichern eines Kabels, wobei der Kabelmanager einen Körper zum Befestigen des Kabelmanagers an einer Struktur und eine mechanische Halterung zum Hindurchführen des Kabels umfasst. Die mechanische Halterung sichert das Kabel in einer festen Position. Der Kabelmanager umfasst einen Sensor, der ein Stromerfassungselement zum Erfassen eines durch das Kabel fließenden Stroms und zum Erzeugen eines ersten Ausgangssignals, das die Stärke des Stroms angibt, aufweist.

JP 2003 072484 A offenbart eine Vorrichtung zur Installation eines Stromsensors, ohne von einem Fahrzeug und einem am Fahrzeug montierten Objekt beeinflusst zu werden. Hierzu werden Stromleitungen des Messobjekts in einen Durchführungsteil des Stromsensors eingeführt. Installationsmittel werden an der Außenseite des Fahrzeugs und des am Fahrzeug montierten Objekts angeordnet, um einen Sensorkörpers des Stromsensors zu installieren, der zum Messen eines durch die Stromleitungen zu dem Messobjekt fließenden Stromwertes vorgesehen ist. Das Installationsmittel verfügt vorzugsweise über Handgriffe zum Binden und Halten der Stromleitungen des Messobjekts.

KR 2010 0043834 A offenbart ein drahtloses Überwachungssystem zur Erkennung des Störstroms einer Übertragungs- und Verteilungsleitung, um den Komfort durch die Bildung eines integrierten Stromwandlersensors und einer Steuerung zu verbessern. Ein Sensor zum Erfassen einer Spannung und eines Stroms umfasst separate CT-Sensoren zum Erhalten einer Spannung und eines Stroms, der den Störstrom einer Übertragungs- und Verteilungsleitung erkennt. Ein Controller erfasst den Strom basierend auf dem Störimpulsstrom und steuert den Strom basierend auf der Eingangsspannung. Der Controller überprüft den Ort des Stromlecks, indem er den Nullpunkt des Stroms überprüft.

Aus JP 5 149256 B2 ist eine Befestigungsstruktur eines Stromsensors bekannt, die den Stromsensor im Vergleich zu herkömmlichen Befestigungsstrukturen besser befestigt. Eine Schutzvorrichtung wird an einer vorbestimmten Zwischenposition eines ersten elektrischen Kabels bereitgestellt. Ein Wellrohr wird mit einem Wellrohr-Eingriffsabschnitt der Schutzvorrichtung in Eingriff gebracht, nachdem das erste elektrische Kabel in einem Aufbewahrungsabschnitt für Elektrokabel untergebracht ist. Der Stromsensor ist an einem Stromsensor-Befestigungsabschnitt der Schutzvorrichtung befestigt. Ein zweites elektrisches Kabel wird zuvor in den Stromsensor eingeführt. Während das zweite elektrische Kabel entlang eines Elektrokabel-Halteabschnitts außerhalb der Schutzvorrichtung geführt wird, wird das zweite elektrische Kabel durch ein gewickeltes Band gehalten.

JP 2019 124515 A offenbart eine Technik, mit der es möglich ist, die Temperatur eines elektrischen Kabels mit hoher Genauigkeit zu messen. Sie umfasst eine Temperatursensoreinheit zum Messen der Temperatur eines elektrischen Kabels durch Kontakt mit diesem. Eine Stromtransformatoreinheit zur Stromversorgung ist in Ringform bereitgestellt, um das elektrische Kabel zu umschließen. Sie dient dem Erzeugen elektrischer Energie durch elektromagnetische Induktion aus einem magnetischen Feld, das in der Peripherie des elektrischen Kabels auftritt. Eine drahtlose Einheit, die mit dem Temperatursensor und der Stromtransformatoreinheit verbunden ist, überträgt die von der Temperatursensoreinheit gemessenen Temperaturdaten des elektrischen Kabels drahtlos nach außen. Eine Körpereinheit ist zum Halten der Stromtransformatoreinheit und der drahtlosen Einheit an der Außenseite des Elektrokabels vorgesehen. Eine Klemme ist mit einem Ende der Körpereinheit in axialer Richtung des elektrischen Kabels verbunden, um das elektrische Kabel zu greifen und ein Ende der Körpereinheit am elektrischen Kabel zu befestigen.

Insbesondere im Bereich eines Drehgestells des Schienenfahrzeugs existieren zumeist beschränkte Platzverhältnisse, um eine Sensoreinrichtung sowie deren Energieversorgung unterzubringen. Dies stellt in besonderer Weise bei der Nachrüstung einer Sensoreinrichtung in einem Schienenfahrzeug bzw. Schienenfahrzeugtyp, welches bzw. welcher für eine solche Nachrüstung nicht vorbereitet ist, eine Herausforderung dar.

Aufgabe der vorliegenden Erfindung ist es daher, eine insbesondere bei einer Nachrüstung einfache und platzsparende Anordnung der Energieversorgung für eine Sensoreinrichtung zu ermöglichen.

Diese Aufgabe wird durch die Merkmale der unabhängigen Patentansprüche gelöst. Weiterbildungen sind jeweils in abhängigen Patentansprüchen angegeben.

Ein erster Aspekt der Erfindung betrifft eine Vorrichtung zur Energieversorgung einer Sensoreinrichtung in einem Schienenfahrzeug, welche ein Gehäuse, in welchem zumindest eine Spule angeordnet ist, welche mit einem einen Wechselstrom führenden Motorkabel induktiv koppelbar ist, aufweist, wobei das Gehäuse ausgestaltet ist, eine Teillänge des Motorkabels zu umschließen, und wobei die zumindest eine Spule um einen ringförmigen Spulenkern gewickelt ist, welcher das Motorkabel konzentrisch oder im Wesentlichen konzentrisch umschließt. Kennzeichnend ist das Gehäuse mehrteilig ausgeführt und weist zumindest ein erstes und ein zweites Gehäuseteil auf, ist der ringförmige Spulenkern mehrteilig ausgeführt und sind zumindest ein erster Spulenkernteil in dem ersten Gehäuseteil und zumindest ein zweiter Spulenkernteil in dem zweiten Gehäuseteil angeordnet, und ist das Gehäuse ferner ausgestaltet, das Motorkabel an einer Komponente des Schienenfahrzeugs mechanisch zu befestigen und/oder das Motorkabel mit zumindest einem weiteren Motorkabel mechanisch zu verbinden.

Entsprechend der einleitend genannten internationalen Patentanmeldung WO 2020/064274 A1 dient die erfindungsgemäße Vorrichtung dazu, eine Sensoreinrichtung mit elektrischer Energie zu versorgen. Eine Sensoreinrichtung kann dabei als eine so genannte Sensorbox ausgestaltet sein, welche an der zu überwachenden Komponente bzw. Komponenten des Schienenfahrzeugs oder in dessen näheren Umfeld angeordnet wird. Die Sensorbox weist ein geschlossenes Gehäuse auf, in welchem insbesondere eine Verarbeitungseinrichtung zur Verarbeitung von Sensoren generierter Signale, eine Speichereinrichtung zur Speicherung von Sensorsignalen und/oder Ergebnissen der Verarbeitung, sowie eine Kommunikationseinrichtung zur Übertragung der verarbeiteten Signale und/oder der Ergebnisse der Verarbeitung zu einer weiteren Einrichtung des Schienenfahrzeugs angeordnet sind. Insbesondere die Verarbeitungseinrichtung ist dabei als eine integrierte Schaltung, insbesondere als ein Mikroprozessor, ausgestaltet, dessen Betrieb eine Gleichspannung erfordert. Die Sensoren können sowohl ebenfalls in dem Gehäuse der Sensorbox als auch außerhalb des Gehäuses angeordnet und mit diesem über geeignete Schnittstellen verbunden sein.

Die für den Betrieb der Sensoreinrichtung benötigte elektrische Energie wird mittels einer induktiven Kopplung einer oder mehrerer Spulen mit einem Motorkabel, welches einen Stromrichter mit einem Traktionsmotor des Schienenfahrzeugs verbindet und in welchem zumindest zeitweise ein Wechselstrom als Teil eines zumindest eine Wicklung des Traktionsmotors versorgenden Drehstroms fließt, gewonnen. Somit wird die zwischen einem Stromrichter und einem Traktionsmotor des Schienenfahrzeugs fließende Wechselstrom ergänzend dazu genutzt, eine Sensoreinrichtung mit elektrischer Energie zu versorgen, wodurch vorteilhaft keine aufwändigere, beispielsweise aufgrund der erforderlichen Führung zusätzlicher Stromleitungen zu der Sensoreinrichtung, oder wartungsintensivere, beispielsweise aufgrund der Verwendung von nicht wieder aufladbaren Batterien, Energieversorgung erforderlich ist. Windungen der Spule sind um einen ringförmigen Spulenkern gewickelt, welcher das Motorkabel konzentrisch bzw. im Wesentlichen konzentrisch umschließt. Vorzugsweise weist der Spulenkern die Form eines Hohlzylinders auf und ist aus einem magnetisierbaren Material wie Eisen oder einer Eisenverbindung hergestellt, um die Induktivität der Spule zu erhöhen. Eine jeweilige Anzahl der Windungen der Spule um den Spulenkern sowie die Anzahl der Spulen selbst kann abhängig von der für den Betrieb der Sensoreinrichtung erforderlichen elektrischen Energie bemessen werden.

Vorzugsweise weist das Gehäuse eine Trennebene zwischen den Gehäuseteilen auf, welche parallel oder im Wesentlichen parallel zu einer Achse des umschlossenen Motorkabels verläuft. In gleicher Weise weisen auch die Spulenkernteile vorzugsweise eine Trennebene auf, welche parallel oder im Wesentlichen parallel zu der Achse des Motorkabels verläuft, wobei die Trennebene der Spulenkernteile vorzugsweise identisch mit der Trennebene der Gehäuseteile ist. Alternativ kann die jeweilige Trennebene, in axialer Richtung betrachtet, jedoch ebenso in einem bestimmten Winkel zu der Achse des Motorkabels verlaufen oder beispielsweise eine jeweilige Struktur ausbilden, welche einer Verzahnung im Sinne einer Passverzahnung entspricht. Ferner ist es nicht erforderlich, dass die Trennebene der Gehäuseteile der Trennebene der Spulenkernteile entspricht. Vielmehr kann letztere, in radialer Richtung betrachtet, auch in einem beliebigen Winkel zu ersterer Trennebene angeordnet sein, beispielsweise in einem rechten Winkel, wobei beispielsweise zunächst die Spulenkernteile um das Motorkabel angeordnet und nachfolgend die Gehäuseteile bzw. Gehäusehälften um den Spulenkern angeordnet werden, wodurch dieser in dem Gehäuse ortsfest gelagert wird.

Besonders bevorzugt sind die Spule sowie der Spulenkern in einem zweiteilig ausgeführten Gehäuse angeordnet und weisen eine identische, parallel zur Achse des Motorkabels verlaufende Trennebene auf. Eine jeweilige Zweiteilung von Gehäuse und Spulenkern in einer Ebene parallel zur Achse des umschlossenen Motorkabels ermöglicht vorteilhaft, die Vorrichtung bzw. das Gehäuse in einfacher Weise an einem bereits in einem Drehgestell des Schienenfahrzeugs geführten Motorkabel anzuordnen, ohne dass dieses Kabel beispielsweise von einem Klemmkasten des Traktionsmotors gelöst und durch eine zylindrische Durchführung des Gehäuses hindurchgeführt werden muss, wie es das in der internationalen Patentanmeldung WO 2020/064274 A1 offenbarte Gehäuse erfordern würde.

Die Gehäuseteile bzw. Gehäusehälften bei einem zweiteiligen Gehäuse sind beispielsweise derart ausgestaltet, dass sie sich im zusammengefügten Zustand zu einem von außen betrachtet weitgehend monolithisch ausgestalteten Gehäuse zusammenfügen, wobei deren einander zugewandten Innenseiten bzw. Unterseiten abstandslos plan aneinander liegen oder ineinandergreifen und das Motorkabel somit über die gesamte Teillänge vollständig umschließen. Grundsätzlich muss das Motorkabel jedoch nicht über die gesamte Teillänge vollständig von dem Gehäuse umschlossen sein. Vielmehr kann es genügen, dass die Innenseiten bzw. Unterseiten der Gehäuseteile bzw. Gehäusehälften im zusammengefügten Zustand nur in dem Bereich des Gehäuses, in welchem der Spulenkern angeordnet ist, keinen Abstand aufweisen, sodass die bündig mit der jeweiligen Unterseite abschließenden Spulenkernteile ebenfalls abstandslos bzw. spaltfrei aneinander angrenzen. Außerhalb dieses Bereichs können die Innenseiten bzw. Unterseiten hingegen einen bestimmten Abstand zueinander aufweisen, ohne dass dies die Funktion der Vorrichtung beeinträchtigen würde.

Für die Führung des Motorkabels weisen die Gehäuseteile bzw. Gehäusehälften an ihren Innenseiten bzw. Unterseiten beispielsweise eine jeweilige Nut auf, deren Form an die Form des Querschnitts des Motorkabels angepasst ist. So sind die Nuten bei einem kreisförmigen bzw. weitgehend kreisförmigen Querschnitt des Motorkabels beispielsweise entsprechend jeweils halbkreisförmig bzw. weitgehend halbkreisförmig ausgestaltet, sodass sie zusammen eine zylindrische bzw. weitgehend zylindrische Durchführung in dem Gehäuse ausbilden. Alternativ kann die Durchführung beispielsweise auch eine elliptische bzw. weitgehend elliptische Form aufweisen. Diese Nutenform bzw. der dadurch gebildete Querschnitt der von den Nuten gebildeten Durchführung ist bei einem die Teillänge des Motorkabels vollständig umschließenden Gehäuse beispielsweise über die gesamte Länge des Gehäuses einheitlich. Jedoch können alternativ die Form der Durchführung in dem Bereich des Gehäuses, in welchem der Spulenkern angeordnet ist, und die Form außerhalb dieses Bereichs unterschiedlich ausgestaltet sein.

Der Querschnitt der Durchführung des Gehäuses ist beispielsweise derart gewählt, dass auch bei Anordnung eines Motorkabels mit einem für die Anwendung üblicherweise verwendeten größtmöglichen Durchmesser in der Durchführung die Gehäuseteile bzw. Gehäusehälften im Bereich des Spulenkerns weiterhin spaltfrei aneinander liegen. Um eine Bewegung des Motorkabels innerhalb der Durchführung, welche über die typische Betriebsdauer eines Schienenfahrzeugs zu einer möglichen Beschädigung des Motorkabels führen könnte, wird das Motorkabel vorzugsweise im Bereich der Durchführung verklemmt. Für eine Klemmung des Motorkabels können, sofern das Zusammenfügen der Gehäuseteile bzw. Gehäusehälften nicht bereits ausreichend ist, ergänzend eine oder mehrere Einlagen aus einem elastischen Kunststoffmaterial, beispielsweise einem Elastomer, in der Durchführung angeordnet werden. Derartige Einlagen überbrücken einen Abstand zwischen dem Mantel des Motorkabels und der radialen Innenseite der Durchführung bzw. der Nuten und werden beim Zusammenfügen der Gehäusehälften ergänzend komprimiert. Vorzugsweise umschließen diese Einlagen das Motorkabel vollständig bzw. nahezu vollständig, um eine zentrierte Anordnung des Motorkabels innerhalb der Durchführung sicherzustellen.

Alternativ zu einem einheitlichen und an einem großen Querschnitt des Motorkabels bemessenen Querschnitt der Durchführung des Gehäuses können beispielsweise sowohl die Radien der Nuten als auch der Durchmesser des Spulenkerns hinsichtlich eines spezifischen Querschnitts des Motorkabels, um welches das Gehäuse angeordnet wird, dimensioniert sein. Vorteilhaft kann hierdurch eine optimale induktive Kopplung bei gleichzeitiger Klemmung des Motorkabels ohne bzw. mit ergänzten Einlagen geringer Dicke erzielt werden.

Erfindungsgemäß ist das Gehäuse ferner ausgestaltet, das Motorkabel an einer Komponente des Schienenfahrzeugs mechanisch zu befestigen und/oder es mit einem oder mehreren weiteren Motorkabeln zu verbinden.

Ein als eine Drehstrommaschine ausgestalteter Traktionsmotor eines Schienenfahrzeugs weist eine oder mehrere Statorwicklungen auf, deren jeweilige Phasen von einem Stromrichter mit einem Dreiphasenwechselstrom variabler Spannung und Frequenz gespeist werden. Entsprechend werden abhängig von der Anzahl Wicklungen des Traktionsmotors und der Anzahl in einem Drehgestell des Schienenfahrzeugs angeordneter Traktionsmotoren drei oder ein ganzzahliges Vielfaches von drei Motorkabel zu einem jeweiligen Traktionsmotor im Bereich des Drehgestells geführt.

Für die Führung dieser Motorkabel sowie deren Befestigung an Komponenten des Drehgestells, beispielsweise dem Drehgestellrahmen, oder des Schienenfahrzeugs, beispielsweise dem Wagenkasten im Bereich des Drehgestells, werden üblicherweise Halterungsschellen in Blockform eingesetzt. Solche Halterungsschellen, in Fachkreisen auch als Blockschellen bezeichnet, sind insbesondere angelehnt an die Deutschen Norm DIN 3015-2, Ausgabe Januar 1999, welche Schellen in Blockform für Leitungen mit einem Durchmesser zwischen 6mm und 406mm betrifft, ausgestaltet.

Eine Blockschelle für die Führung und Befestigung von drei Motorkabeln kann demnach ein Klemmhälftenpaar mit drei Durchführungen aufweisen, wobei das Klemmhälftenpaar mittels zwei oder mehr Schrauben, beispielsweise Sechskant- oder Zylinderschrauben, verspannt und gegebenenfalls ergänzend mittels dieser Schrauben an einer Komponente des Schienenfahrzeugs befestigt wird. Für die Führung von jeweils drei Motorkabeln zu zwei Traktionsmotoren können dabei beispielsweise auch zwei solche Klemmhälftenpaare zusammengefasst bzw. übereinander angeordnet und durch gemeinsame Schrauben verspannt und befestigt werden, wobei in diesem Fall die beiden aneinandergrenzenden mittleren Klemmhälften auch als ein einziges Bauteil mit entsprechenden Nuten für gesamt sechs Motorkabel verwirklicht sein können.

Das Gehäuse der erfindungsgemäßen Vorrichtung ist vorzugsweise ausgestaltet, eine solche im Bereich eines Drehgestells angeordnete Blockschelle zu ersetzen bzw. deren Funktion für zumindest ein Motorkabel mit zu übernehmen. Sofern die Blockschelle einer Befestigung des Motorkabels bzw. der mehreren Motorkabel an einer Komponente des Schienenfahrzeugs dient, weist das Gehäuse beispielsweise einen gleichen Abstand der Befestigungsschrauben wie die zu ersetzende Blockschelle auf und verwendet entsprechend dimensionierte Befestigungsschrauben. Bereits vorhandene Befestigungspunkte an einer Komponente sind hierdurch für die Befestigung des Gehäuses verwendbar, sodass vorteilhaft eine aufwandsarme Nachrüstung des Gehäuses der Vorrichtung ohne erforderliche Änderungen an der Komponente ermöglicht wird. Vorzugsweise dienen die Schrauben, welche die Gehäuseteile bzw. Gehäusehälften zusammenfügen, oder zumindest eine dieser Schrauben entsprechend der ersetzten Blockschelle auch einer mechanischen Befestigung des Gehäuses an der Komponente.

Entsprechend der weiteren möglichen Funktion einer Blockschelle kann das Gehäuse alternativ dazu dienen, mehrere im Bereich des Drehgestells bereits zu dem einen oder den mehreren Traktionsmotoren geführte Motorkabel an einer weiteren Stelle dieser Führung mechanisch zu verbinden, um sie an dieser weiteren Stelle mechanisch ergänzend zu stabilisieren. Gleichzeitig kann durch die Verbindung des Gehäuses mit mehreren Motorkabeln aufgrund der daraus resultierenden größeren Steifigkeit auch eine nahezu ortsfeste Anordnung des Gehäuses insbesondere bei einer solchen Nachrüstung erzielt werden.

Bei mehreren mechanisch zu befestigenden bzw. zu verbindenden Motorkabeln muss das Gehäuse diese nicht alle umschließen. Vielmehr kann das Gehäuse ausschließlich eines der mehreren Motorkabel umschließen, während die weiteren Motorkabel mittels einer oder mehrerer Halterungsschellen geführt werden. Diese weiteren Halterungsschellen sind dabei beispielsweise entsprechend als Blockschellen oder als Halterungsschellen angelehnt an die Deutsche Norm DIN 3016, insbesondere DIN 3016-1, Ausgabe Dezember 2018, oder DIN 3016-2, Ausgabe August 2020, ausgestaltet und an dem Gehäuse geeignet mechanisch befestigt.

Grundsätzlich müssen die Gehäuseteile bzw. Gehäusehälften des Gehäuses jeweils nicht zwingend geschlossen ausgeführt sein, sondern können, insbesondere wenn nur die Spulenkernteile sowie die zumindest eine Spule in dem Gehäuse angeordnet sind, auch weitgehend offen gestaltet sein. Vorzugsweise sind die Spulenkernteile sowie die zumindest eine um diese gewickelte Spule dabei vergossen ausgeführt, wodurch für diese bereits ein Schutz vor insbesondere Staub und Feuchtigkeit erzielt wird. Das Gehäuse dient somit vorwiegend einem ergänzenden mechanischen Schutz des Spulenkerns und der zumindest einen Spule vor auftreffenden Objekten wie beispielsweise aufgewirbelten Schottersteinen des Gleisbetts. So kann das Gehäuse im Bereich des Spulenkerns beispielsweise entsprechend einer käfigartigen Anordnung von Streben um den Spulenkern ausgestaltet sein, welche zudem einer ortsfesten Lagerung der Spulenkernteile samt der zumindest einen Spule sowie einer Führung des Motorkabels dienen.

Das Gehäuse bzw. dessen Teile sind vorzugsweise aus einem Metall, beispielsweise einer Aluminium-Legierung, hergestellt, wodurch diese langlebig und vergleichsweise robust gegenüber Umwelteinflüssen sind. Alternativ könne diese jedoch ebenso aus einem Kunststoff-Material, beispielsweise einem Copolymeren Polypropylen oder einem Polyamid, hergestellt sein. Aus den genannten Werkstoffen sind üblicherweise auch bekannte Blockschellen, insbesondere nach der DIN 3015-2 gefertigte Halterungsschellen, hergestellt.

Einer ersten Ausgestaltung der Vorrichtung zufolge ist zumindest das Gehäuseteil, in welchem die zumindest eine Spule angeordnet ist, über zumindest eine verschließbare Öffnung an einer Oberseite und/oder Stirnseite zugänglich.

Zumindest das Gehäuseteil bzw. die Gehäusehälfte, in welchem bzw. in welcher die zumindest eine Spule angeordnet ist, ist gemäß dieser Ausgestaltung beispielsweise vollständig geschlossen ausgeführt und bildet zumindest einen abgeschlossenen Raum aus. In einem solchen, nach beispielsweise der Schutzart IP67 vor Umwelteinflüssen geschützten Raum können einerseits ein Spulenkernteil sowie die zumindest eine Spule angeordnet sein, andererseits können in dem Raum bzw. in einem davon getrennten weiteren Raum weitere elektronische Komponenten, welche einer Verarbeitung der in der zumindest einen Spule induktiv generierten elektrischen Energie dienen, angeordnet werden.

So weist zumindest dieses Gehäuseteil bzw. diese Gehäusehälfte beispielsweise einen wannenförmigen Grundkörper mit einer geschlossenen bzw. lediglich im Bereich des Spulenkerns offenen Unterseite sowie einer vorstehend beschriebenen Nut zur Führung des Motorkabels auf. Die Öffnungen an der Unterseite dienen dabei einerseits dazu, die jeweiligen Enden der Spulenkernteile im Bereich der Trennebene zwischen den Gehäuseteilen bzw. Gehäusehälften direkt aneinander liegend anordnen zu können, andererseits um insbesondere bei einem aus einem elektrisch leitfähigen Material wie beispielsweise einer Aluminium-Legierung hergestellten Gehäuse den magnetischen Fluss nicht kurzzuschließen.

Einen Zugang zu dem bzw. zu den in dem wannenförmigen Grundkörper ausgebildeten Räumen ermöglicht zumindest eine Öffnung an der Oberseite und/oder an zumindest einer der beiden Stirnseiten des Gehäuseteils bzw. der Gehäusehälfte. Eine solche Öffnung ist beispielsweise über einen entsprechend angepassten Deckel verschlossen, welcher mittels mehrerer Schrauben an dem Grundkörper lösbar befestigt wird. Für den gewünschten Schutz gemäß der beispielhaft genannten Schutzart IP67 ist ergänzend zwischen dem Deckel und dem Grundkörper eine Dichtung aus einem flexiblen Material vorzusehen.

Die mehreren Gehäuseteile bzw. die beiden Gehäusehälften des Gehäuses können identisch bzw. weitgehend identisch ausgestaltet sein, insbesondere wenn in diesen zumindest eine jeweilige Spule sowie gegebenenfalls weitere elektronische Komponenten angeordnet sind. In diesem Fall kann mittels der mehreren Spulen eine Sensoreinrichtung versorgt werden, wobei die eine Spule in der einen Gehäusehälfte beispielsweise einer redundanten Versorgung bei Ausfall der anderen Spule dienen kann. Ebenso können mittels der mehreren Spulen auch mehrere Sensoreinrichtungen versorgt werden, wobei beispielsweise eine jeweilige Gehäusehälfte bzw. ein jeweiliges Gehäuseteil einer Sensoreinrichtung zugeordnet ist. Alternativ kann auch nur das eine Gehäuseteil bzw. die eine Gehäusehälfte, in welcher zumindest eine Spule sowie gegebenenfalls weitere elektronische Komponenten angeordnet sind, derart ausgestaltet sein, während weitere Gehäuseteile bzw. die weitere Gehäusehälfte entsprechend vorstehender Beschreibung weitgehend offen ausgestaltet ist.

Eine Übertragung der von Spulenkern und Spule bzw. Spulen generierten elektrischen Energie zu einer Sensoreinrichtung erfolgt mittels elektrischer Leitungen, welche zu deren Schutz vor Umwelteinflüssen vorzugsweise in einem Kabel zusammengefasst sind. Ein solches Kabel wird beispielsweise durch eine in einer Außenwand vorgesehene Durchführung geführt, welche zur Gewährleistung der erforderlichen Schutzart durch Vorsehen geeigneter Dichtungen entsprechend abgedichtet ist. Alternativ können die elektrischen Leitungen auch an einer Buchse mit zumindest einer entsprechenden Anzahl elektrischer Anschlüsse terminiert sein, welche in einer Durchführung einer Außenwand angeordnet ist. Diese Buchse ist mit einem kompatibel ausgestalteten Stecker verbindbar, in welchem wiederum elektrische Leitungen des beispielsweise zu der Sensoreinrichtung geführten Kabels terminiert sind. In gleicher Weise können auch die Gehäuseteile bzw. die beiden Gehäusehälften elektrisch miteinander verbunden werden. Dies ist insbesondere sinnvoll, wenn in mehreren Gehäuseteilen bzw. in beiden Gehäusehälften Spulen sowie gegebenenfalls weitere elektronische Komponenten angeordnet sind, welche zusammenwirkend der Versorgung einer Sensoreinrichtung mit elektrischer Energie dienen.

Einer weiteren Ausgestaltung der Vorrichtung zufolge sind zumindest zwei Spulen in dem Gehäuse angeordnet, wobei die zumindest zwei Spulen um einen gleichen Spulenkernteil oder um unterschiedliche Spulenkernteile gewickelt sind.

Insbesondere abhängig von der für die Versorgung der Sensoreinrichtung benötigten elektrischen Energie können an dem Spulenkern mehrere Spulen angeordnet sein, wobei die mittels Induktion aus dem Motorkabel extrahierbare elektrische Energie begrenzt ist bzw. nicht proportional zu der Anzahl Spulen ansteigt. Die mehreren Spulen können dabei um einen gleichen Spulenkernteil oder um unterschiedliche Spulenkernteile gewickelt sein und somit in dem gleichen Gehäuseteil bzw. der gleichen Gehäusehälfte oder in unterschiedlichen Gehäuseteilen bzw. Gehäusehälften angeordnet sein. Entsprechend können auch jeweils einer Spule nachgeordnete elektronische Komponenten in der gleichen oder in unterschiedlichen Gehäuseteilen bzw. Gehäusehälften angeordnet sein. Alternativ kann das Vorsehen mehrerer Spulen auch dazu dienen, eine Redundanz zu gewährleisten, um beispielsweise bei Ausfall einer Spule bzw. dieser Spule nachgeordneter elektronischer Komponenten eine fortgesetzte Versorgung der Sensoreinrichtung zu gewährleisten.

Einer weiteren Ausgestaltung der Vorrichtung zufolge sind in zumindest einem der Gehäuseteile oder in einem weiteren Gehäuse zumindest ein erster Spannungswandler, zumindest ein Gleichspannungszwischenkreis mit zumindest einem Zwischenkreiskondensator und zumindest ein zweiter Spannungswandler angeordnet sind, wobei der erste Spannungswandler eingangsseitig mit der zumindest einen Spule und ausgangsseitig mit dem Gleichspannungszwischenkreis verbunden ist, und wobei der erste Spannungswandler ausgestaltet ist, eine Wechselspannung der zumindest einen Spule in eine Gleichspannung des Gleichspannungszwischenkreis zu wandeln, und wobei der zweite Spannungswandler eingangsseitig mit dem Gleichspannungszwischenkreis und ausgangsseitig mit der Sensoreinrichtung verbunden ist, und wobei der zweite Spannungswandler ausgestaltet ist, die Gleichspannung des Gleichspannungszwischenkreises in eine Speise-Gleichspannung zu wandeln.

Bei einem mit einem Dreiphasenwechselstrom gespeisten Traktionsmotor erfolgt eine Steuerung der Drehzahl und des Drehmoments der Drehstrommaschine seitens des speisenden Stromrichters mittels eines Wechselstroms variabler Frequenz und Spannungsamplitude. Das variable Spannungsniveau des in dem Motorkabel fließenden Wechselstroms hat zur Folge, dass auch die Ausgangsspannung der Spule sowie dessen Frequenz entsprechend variiert. Um die Sensoreinrichtung mit einer konstanten Gleichspannung versorgen zu können, wird die Spule mit einem ersten Spannungswandler verbunden, welcher durch aktives Steuern des Schaltens von Halbleiterschaltern eine konstante bzw. nahezu konstante Ausgangsspannung für einen Gleichspannungszwischenkreis bereitstellt. Die Ansteuerung der Halbleiterschalter bzw. die Regelung auf eine konstante Ausgangsspannung des ersten Spannungswandlers erfolgt dabei aus einer Überwachung der Spannung des Gleichspannungszwischenkreises, wobei die für die Versorgung der elektronischen Bauteile des Reglers benötigte elektrische Energie beispielsweise von den Ausgängen des zweiten Spannungswandlers bereitgestellt wird. Für eine Glättung bzw. Verringerung der Welligkeit der Ausgangsspannung des ersten Spannungswandler ist in dem Gleichspannungszwischenkreis zumindest ein Zwischenkreiskondensator vorgesehen, welcher parallel zu dem ersten Spannungswandler geschaltet ist. Mit dem Gleichspannungszwischenkreis ist eingangsseitig ein zweiter Spannungswandler verbunden, welcher die Gleichspannung des Gleichspannungszwischenkreises in die für den Betrieb der Sensoreinrichtung erforderliche konstante Gleichspannung wandelt. Der zweite Spannungswandler wandelt dabei beispielsweise eine an dem Gleichspannungszwischenkreis anliegende höhere Gleichspannung in eine Gleichspannung mit einem niedrigeren konstanten Spannungsniveau. Insbesondere kann der zweite Spannungswandler als ein Tiefsetzsteller, welcher ein höheres Spannungsniveau in einem festen Verhältnis auf niedrigeres Spannungsniveau wandelt, ausgestaltet sein.

Die Spannungswandler sowie der zumindest eine Zwischenkreiskondensator sind vorzugsweise in dem gleichen Gehäuseteil bzw. in der gleichen Gehäusehälfte wie die Spule angeordnet, um diese in einfacher Weise sowie auf kurzem Wege elektrisch miteinander zu verbinden. Alternativ können diese Komponenten jedoch alle oder Teile von diesen in einem anderen Gehäuseteil angeordnet sein oder, insbesondere wenn in dem Gehäuseteil der Spule kein geschlossener Raum vorgesehen ist, in welchem die Komponenten vor Umwelteinflüssen geschützt angeordnet werden können, auch in einem weiteren Gehäuse angeordnet sein. Ein solches weiteres Gehäuse ist beispielsweise das Gehäuse der Sensoreinrichtung bzw. die Sensorbox oder ein weiteres Gehäuse, welches zwischen dem Gehäuse der Spule und dem Gehäuse der Sensoreinrichtung angeordnet ist. Ein solches weiteres Gehäuse kann beispielsweise an einem Ort im Drehgestell des Schienenfahrzeugs angeordnet werden, welcher gegenüber dem Ort, an dem das Gehäuse der Spule angeordnet ist, geringeren Umwelteinflüssen einschließlich geringeren von dem Drehgestell ausgehenden Vibrationen und Wärmeabstrahlungen, ausgesetzt ist.

Einer zu der vorstehenden Ausgestaltung alternativen Ausgestaltung der Vorrichtung zufolge sind in zumindest einem der Gehäuseteile oder in einem weiteren Gehäuse zumindest ein erster Spannungswandler, zumindest ein Gleichspannungszwischenkreis mit zumindest einem Zwischenkreiskondensator, zumindest ein dritter Spannungswandler, zumindest eine Energiespeicheranordnung sowie zumindest ein vierter Spannungswandler angeordnet, wobei der erste Spannungswandler eingangsseitig mit der zumindest einen Spule und ausgangsseitig mit dem Gleichspannungszwischenkreis verbunden ist, und wobei der erste Spannungswandler ausgestaltet ist, eine Wechselspannung der zumindest einen Spule in eine Gleichspannung des Gleichspannungszwischenkreises zu wandeln, wobei der dritte Spannungswandler eingangsseitig mit dem Gleichspannungszwischenkreis und ausgangsseitig mit der Energiespeicheranordnung verbunden ist, und wobei der dritte Spannungswandler ausgestaltet ist, die Gleichspannung des Gleichspannungszwischenkreises in eine Ladegleichspannung für die Energiespeicheranordnung zu wandeln, und wobei der vierte Spannungswandler eingangsseitig mit der Energiespeicheranordnung und ausgangsseitig mit der Sensoreinrichtung verbunden ist, und wobei der vierte Spannungswandler ausgestaltet ist, eine Gleichspannung der Energiespeicheranordnung in eine Speise-Gleichspannung zu wandeln.

Der eingangsseitig mit dem Gleichspannungszwischenkreis verbundene dritte Spannungswandler ist entsprechend dem vorstehend beschriebenen zweiten Spannungswandler beispielsweise als ein Tiefsetzsteller ausgestaltet, dessen Ausgangsspannung jedoch nicht auf die Speise-Gleichspannung bzw. Versorgungsspannung der Sensoreinrichtung abgestimmt ist, sondern auf eine Ladespannung für die Energiespeicheranordnung, mit welcher der dritte Spannungswandler ausgangsseitig verbunden ist. Ein Tiefsetzsteller mit einem festen Spannungswandlungsverhältnis ist insbesondere einsetzbar, wenn die Energiespeicheranordnung eine Anzahl in Serie oder parallel geschalteter Kondensatoren, insbesondere so genannte Superkondensatoren, umfasst, welche mit einer konstanten Ladespannung ladbar sind. Sofern die Energiespeicheranordnung hingegen wiederaufladbare Batterien, insbesondere Lithium-Ionen-Batterien, umfasst, ist der dritte Spannungswandler vorzugsweise als ein Laderegler ausgestaltet, welcher die Zwischenkreisspannung in eine für das Laden der Batterien geeignete Ladespannung wandelt. Die in der Energiespeicheranordnung gespeicherte elektrische Energie dient dazu, die Sensoreinrichtung zumindest während eines Zeitraums des Betriebs des Schienenfahrzeugs und unabhängig davon, ob mittels der zumindest einen Spule elektrische Energie induktiv generiert wird oder nicht, mit elektrischer Energie zu versorgen.

Die Kapazität der Energiespeicheranordnung ist abhängig von Zeiträumen, in denen seitens der zumindest einen Spule keine elektrische Energie generiert wird bzw. abhängig von der in diesen Zeiträumen üblicherweise für die Funktion der Sensoreinrichtung benötigten elektrischen Energie zu bemessen. Dabei kann jedoch berücksichtigt werden, dass die Funktion der Sensoreinrichtung üblicherweise nur während des normalen Betriebs des Schienenfahrzeugs sicherzustellen ist, während für Zeiträume, in denen das Schienenfahrzeug abgerüstet, d.h. außer Betrieb und abgestellt ist, hingegen keine elektrische Energie in der Energiespeicheranordnung vorgehalten werden muss. Die speicherbare Energiemenge kann sich bei einem Triebzug im Fahrgastbetrieb beispielsweise an einer maximalen Aufenthaltsdauer an Haltestellen oder an einer maximalen Dauer von Rollphasen in einzelnen Streckenabschnitten orientieren, zwischen denen die Energiespeicheranordnung mittels induktiv generierter elektrischer Energie wieder ausreichend aufgeladen werden kann.

Um die Ausgangsspannung der Energiespeicheranordnung auf das Niveau der Versorgungsspannung der Sensoreinrichtung anzuheben, ist nach dieser Ausgestaltung ein vierter Spannungswandler vorgesehen. Dieser ist beispielsweise als ein Hochsetzsteller ausgestaltet, welcher ein niedriges Spannungsniveau in einem festen Verhältnis auf ein konstantes höheres Spannungsniveau wandelt. Sowohl der zweite Spannungswandler der vorstehenden alternativen Ausgestaltung als auch der vierte Spannungswandler stellen somit die gewünschte Versorgungsspannung für die Sensoreinrichtung bereit, sodass eine kontinuierliche Versorgung der Sensoreinrichtung während des Betriebs des Schienenfahrzeugs sichergestellt wird.

Vorzugsweise sind alle Komponenten dieser Ausgestaltung in dem gleichen Gehäuseteil bzw. in der gleichen Gehäusehälfte angeordnet, sodass das Gehäuseteil bzw. die Gehäusehälfte direkt mittels eines Kabels mit der Sensoreinrichtung verbunden werden kann. Entsprechend der vorstehenden Ausgestaltung können alle oder einzelne dieser Komponenten jedoch ebenso in einem anderen Gehäuseteil oder auch in einem weiteren Gehäuse, insbesondere in dem Gehäuse der Sensoreinrichtung, angeordnet sein.

Erfindungsgemäß sind in zumindest einem der Gehäuseteile oder in einem weiteren Gehäuse zumindest ein erster Spannungswandler, zumindest ein Gleichspannungszwischenkreis mit einem Zwischenkreiskondensator, zumindest ein zweiter Spannungswandler, zumindest ein dritter Spannungswandler, zumindest eine Energiespeicheranordnung sowie zumindest ein vierter Spannungswandler angeordnet, wobei der erste Spannungswandler eingangsseitig mit der zumindest einen Spule und ausgangsseitig mit dem Gleichspannungszwischenkreis verbunden ist, und wobei der erste Spannungswandler ausgestaltet ist, eine Wechselspannung der zumindest einen Spule in eine Gleichspannung des Gleichspannungszwischenkreises zu wandeln, wobei der zweite Spannungswandler eingangsseitig mit dem Gleichspannungszwischenkreis und ausgangsseitig mit der Sensoreinrichtung verbunden ist, und wobei der zweite Spannungswandler ausgestaltet ist, die Gleichspannung des Gleichspannungszwischenkreises in eine Speise-Gleichspannung zu wandeln, wobei der dritte Spannungswandler eingangsseitig mit dem Gleichspannungszwischenkreis und ausgangsseitig mit der Energiespeicheranordnung verbunden ist, und wobei der dritte Spannungswandler ausgestaltet ist, die Gleichspannung des Gleichspannungszwischenkreises in eine Ladegleichspannung für die Energiespeicheranordnung zu wandeln, und wobei der vierte Spannungswandler eingangsseitig mit der Energiespeicheranordnung und ausgangsseitig mit der Sensoreinrichtung verbunden ist, und wobei der vierte Spannungswandler ausgestaltet ist, eine Gleichspannung der Energiespeicheranordnung in die Speise-Gleichspannung zu wandeln.

Diese Ausgestaltung stellt eine vorteilhafte Kombination der beiden vorstehenden Ausgestaltungen dar, wobei sowohl der zweite Spannungswandler als auch der dritte Spannungswandler mit dem Gleichspannungszwischenkreis verbunden sind bzw. aus diesem gespeist werden. Dabei kann während der Zeiträume, in denen die zumindest eine Spule elektrische Energie generiert, die Sensoreinrichtung von dem zweiten Spannungswandler gespeist sowie, sofern erforderlich, die Energiespeicheranordnung über den dritten Spannungswandler geladen werden, während in den Zeiten, in denen die zumindest eine Spule keine elektrische Energie generiert, eine Speisung der Sensoreinrichtung aus der Energiespeicheranordnung und dem vierten Spannungswandler erfolgt.

Zweite und vierte Spannungswandler können beispielsweise ausgangsseitig elektrisch zusammengeschaltet werden, sodass, sofern die genannten Komponenten nicht in dem Gehäuse der Sensoreinrichtung angeordnet sind, ein einziges elektrisches Kabel zu dem Gehäuse der Sensoreinrichtung zu deren Versorgung geführt werden muss. Wiederum ist jedoch eine Anordnung aller oder einzelner der Komponenten dieser Ausgestaltung in einem anderen Gehäuseteil oder in einem weiteren Gehäuse und insbesondere in dem Gehäuse der Sensoreinrichtung möglich.

Einer weiteren Ausgestaltung der Vorrichtung zufolge sind in zumindest dem Gehäuseteil, in welchem die zumindest eine Spule angeordnet ist, ferner eine Einrichtung zur Erfassung einer Drehzahl und/oder eine Einrichtung zur Erfassung einer Stromsignatur angeordnet, welche mit der Spule verbunden sind.

Solche mit der Spule verbundene Einrichtungen können grundsätzlich der Sensoreinrichtung zugeordnet werden bzw. ergänzend zu Sensoren der Sensoreinrichtung Informationen über den Zustand bzw. den Betriebszustand einer Komponente des Schienenfahrzeugs bereitstellen. So werden in einer Einrichtung zur Erfassung einer Drehzahl aus einer Frequenz der an der Spule anliegenden Wechselspannung, welche der Frequenz der an dem Motorkabel anliegenden Wechselspannung entspricht, Informationen generiert, aus welcher eine aktuelle Drehzahl des Traktionsmotors bestimmt werden kann. Die Bestimmung der Drehzahl kann, insbesondere unter Berücksichtigung der Anzahl Polpaare des Traktionsmotors, dabei in der Einrichtung selbst oder in einer weiteren Einrichtung, welcher die Informationen zugeführt werden, erfolgen. Eine solche weitere Einrichtung ist beispielsweise die Verarbeitungseinrichtung der Sensoreinrichtung oder eine zentrale Antriebssteuerung des Schienenfahrzeugs. Eine Übertragung der Informationen bzw. der daraus bestimmten Drehzahlen von der Einrichtung zur Drehzahlmessung zu der Verarbeitungseinrichtung der Sensoreinrichtung erfolgt beispielsweise über gesonderte Leitungen, welche zusammen mit Leitungen für die Energieversorgung der Sensoreinrichtung in einem Kabel geführt werden. Von der Verarbeitungseinrichtung werden die Informationen bzw. die daraus bestimmten Drehzahlen beispielsweise zusammen mit weiteren Informationen über die Kommunikationseinrichtung zu weiteren Komponenten, insbesondere zu einer zentralen Antriebs- oder Fahrzeugsteuerung des Schienenfahrzeugs, übertragen. Die derart bestimmten Drehzahlen können anstelle oder ergänzend zu mittels beispielsweise eines bekannten Drehzahlgebers bestimmten Drehzahlen für die Steuerung des Antriebs- bzw. Traktionssystems des Schienenfahrzeugs dienen.

Eine Einrichtung zur Erfassung einer Stromsignatur dient hingegen einer Erfassung des Frequenzspektrums des in dem Motorkabel fließenden Stroms, d.h. des Motorstroms einer Phase des Dreiphasenwechselstroms, mit welchem die Statorwicklung des Traktionsmotors gespeist wird. Dabei wird das Frequenzspektrum des Motorstroms aus Messungen eines durch die Spule fließenden Stroms bzw. einer an der Spule anliegenden Wechselspannung bestimmt. Aus einer nachfolgenden Analyse des bestimmten Frequenzspektrums des Motorstroms können zusätzliche Frequenzanteile identifiziert werden, welche mit den Frequenzkomponenten des Motorstroms überlagert sind. Aus diesen zusätzlichen Frequenzanteilen kann auf eine fehlerhafte bzw. beschädigte Komponente des Traktionsmotors, beispielsweise auf ein defektes Wälzlager, in welchem die Motorwelle gelagert ist, geschlossen werden. Eine solche Analyse eines Signals des Statorstroms ist unter dem Begriff der Motor Current Signature Analysis (MCSA) bekannt. Vorteilhaft eignet sich die Signaturanalyse dazu, alternativ zu beispielsweise Vibrationssensoren einen Defekt an einer Komponente des Traktionsmotors detektieren zu können. Da die Analyse des Frequenzspektrums rechenaufwändig ist, wird diese vorzugsweise nicht von der in dem Gehäuseteil angeordneten Erfassungseinrichtung durchgeführt, sondern beispielsweise von der Verarbeitungseinrichtung der Sensoreinrichtung oder einer weiteren zentralen Einrichtung des Schienenfahrzeugs. Die von der Erfassungseinrichtung erzeugten Stromsignale werden entsprechend über gesonderte Leitungen in dem zu der Sensoreinrichtung geführten Kabel übertragen, um in dieser weiterverarbeitet und/oder von dieser mittels der Kommunikationseinrichtung zu einer zentralen Einrichtung übertragen zu werden.

Ein zweiter Aspekt der Erfindung betriff ein Schienenfahrzeug, welches zumindest eine Traktionseinrichtung, welche zumindest einen Traktionsmotor sowie einen den zumindest einen Traktionsmotor speisenden Stromrichter umfasst, wobei Stromrichter und Traktionsmotor mittels einer Mehrzahl Motorkabel verbunden sind, und zumindest eine Sensoreinrichtung mit einer Anzahl Sensoren, welche einer Erfassung eines Zustands zumindest einer Komponente des Schienenfahrzeugs dienen, aufweist. Kennzeichnend weist das Schienenfahrzeug ferner zumindest eine erfindungsgemäße Vorrichtung zur Versorgung der zumindest einen Sensoreinrichtung mit elektrischer Energie auf.

Entsprechend der vorstehenden Beschreibung ist der zumindest eine Traktionsmotor beispielsweise als eine Drehstrommaschine mit einer oder mehreren Statorwicklungen ausgestaltet, deren jeweiligen drei Phasen von einem Stromrichter mit einem Dreiphasenwechselstrom variabler Spannung und Frequenz gespeist werden. Eine solche Drehstrommaschine ist beispielsweise eine Asynchron- oder Synchronmaschine. Der Traktionsmotor ist beispielsweise in einem Drehgestell angeordnet und treibt direkt oder über ein Getriebe einen in dem Drehgestell gelagerten Radsatz bestehend aus einer Radsatzwelle sowie zwei daran angeordneten Rädern an. Zwischen Motor und Radsatzwelle bzw. zwischen Motor und Getriebe oder zwischen Getriebe und Radsatzwelle kann ergänzend eine Kupplung angeordnet sein, welche insbesondere relative Bewegungen dieser Komponenten zueinander ermöglicht. Abhängig von der Anzahl Wicklungen des Traktionsmotors und der Anzahl in einem Drehgestell angeordneter Traktionsmotoren sind drei oder ein ganzzahliges Vielfaches von drei Motorkabel im Bereich des Drehgestells geführt. Drehgestelle mit darin gelagerten sowie zumindest teilweise angetriebenen Radsätzen dienen dazu, das Schienenfahrzeug auf einem Gleis abzustützen.

Die zumindest eine Sensoreinrichtung kann im Bereich eines solchen angetriebenen Drehgestells, einem so genannten Triebdrehgestell, angeordnet sein, um mittels einer Anzahl an dem Traktionsmotor oder Getriebe oder in deren unmittelbarer Umgebung angeordneter Sensoren deren Zustand zu erfassen. Eine Versorgung der Sensoreinrichtung mit elektrischer Energie erfolgt dabei mittels einer an einem Motorkabel angeordneten erfindungsgemäßen Vorrichtung, wobei die Vorrichtung das Motorkabel an einer Komponente des Schienenfahrzeugs befestigt und/oder dieses mit zumindest einem weiteren Motorkabel verbindet. Wie vorstehend bereits ausgeführt, ermöglicht die erfindungsgemäße Vorrichtung vorteilhaft eine aufwandsarme Nachrüstung einer solchen Sensoreinrichtung insbesondere in bereits im Betrieb befindlichen Schienenfahrzeugen.

Einer Ausgestaltung des Schienenfahrzeugs zufolge ist eine Komponente, an welcher das Gehäuse der Vorrichtung befestigbar ist, ein Traktionsmotor, ein Drehgestell oder ein Wagenkasten des Schienenfahrzeugs.

Ausführungsbeispiele der Erfindung werden nachfolgend anhand von Figuren beschrieben. Dabei zeigen:
- Fig 1: ein Schienenfahrzeug,
- FIG 2: ein Triebdrehgestell mit erfindungsgemäßen Vorrichtungen und Sensoreinrichtungen,
- FIG 3: ein Blockschaltbild von Komponenten der erfindungsgemäßen Vorrichtung und der Sensoreinrichtung,
- FIG 4: ein Blockschaltbild mit einer alternativen Anordnung der Komponenten in mehreren Gehäusen,
- FIG 5: ein Blockschaltbild mit einer weiteren alternativen Anordnung von Komponenten in mehreren Gehäusen,
- FIG 6: ein erstes Beispiel einer erfindungsgemäßen Vorrichtung in einer Draufsicht,
- FIG 7: die Vorrichtung des ersten Beispiels in einer Seitenansicht,
- FIG 8: die Vorrichtung des ersten Beispiels in einer Frontansicht mit ergänzten Halterungen für weitere Motorkabel,
- FIG 9: ein zweites Beispiel einer erfindungsgemäßen Vorrichtung in einer Frontansicht, und
- FIG 10: die Vorrichtung des zweiten Beispiels in einer Seitenansicht.

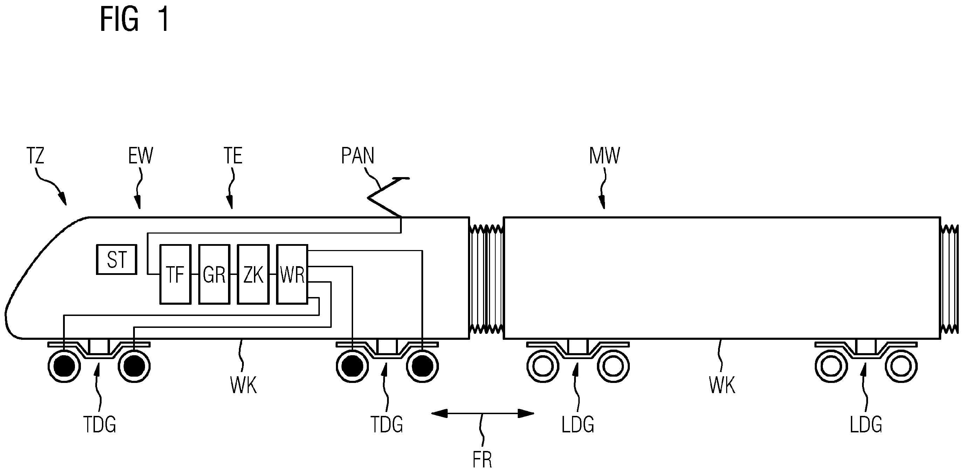

FIG 1 zeigt schematisch ein beispielhaftes Schienenfahrzeug in einer Seitenansicht. Das beispielhaft dargestellte Schienenfahrzeug ist als ein Triebzug TZ für den Personentransport mit einer Mehrzahl Wagen ausgestaltet, wobei lediglich ein Endwagen EW sowie ein mit diesem gekoppelter Mittelwagen MW dargestellt sind. Beide Wagen verfügen über einen Wagenkasten WK mit einem jeweiligen Fahrgastraum, welcher sich über Drehgestelle in Form von Triebdrehgestellen TDG bzw. Laufdrehgestellen LDG auf nicht dargestellten Schienen abstützt. Das Schienenfahrzeug kann in gleicher Weise jedoch als beispielsweise eine Lokomotive mit lediglich einem Wagenkasten verwirklicht sein.

In dem Endwagen EW sind schematisch Komponenten der Traktionseinrichtung TE des elektrisch betriebenen Schienenfahrzeugs angegeben. Diese sind üblicherweise in speziellen Bereichen innerhalb des Wagenkastens, im Unterflurbereich, im Dachbereich oder auch verteilt über mehrere Wagen angeordnet. Weitere Komponenten der Traktionseinrichtung TE, beispielsweise eine Traktionsbatterie, sowie für den Betrieb der Komponenten sowie für das Wohlbefinden der Fahrgäste erforderliche Hilfsbetriebe können ergänzend vorgesehen sein, sind in der FIG 1 jedoch nicht speziell dargestellt.

Über einen im Dachbereich des Endwagens EW angeordneten Stromabnehmer PAN ist die Traktionseinrichtung TE mit einer nicht dargestellten Oberleitung eines Bahnversorgungsnetzes elektrisch verbindbar, wobei die Oberleitung in dem Beispiel einen Einphasenwechselstrom führt. Dieser Wechselstrom wird einer netzseitigen Primärwicklung eines Transformators TF zugeführt, in welchem das netzseitige Spannungsniveau von beispielsweise 15kV oder 25kV auf ein niedrigeres Spannungsniveau heruntertransformiert wird. Eine Sekundärwicklung des Transformators TF ist mit einem netzseitigen Stromrichter, beispielsweise ein Gleichrichter GR bzw. Vierquadrantensteller, verbunden, welcher die anliegende Wechselspannung gleichrichtet. Der netzseitige Stromrichter GR speist einen Gleichspannungs-Zwischenkreis ZK, welcher wiederum einen lastseitigen Stromrichter WR, beispielsweise ein Wechselrichter bzw. Pulswechselrichter, speist. Der Pulswechselrichter generiert aus der Gleichspannung beispielsweise eine Dreiphasenwechselspannung mit variabler Frequenz und Amplitude, mit welcher dreiphasigen Statorwicklungen von Traktionsmotoren in den Traktionsdrehgestellen TDG gespeist werden. Gesteuert wird die Funktion insbesondere des netzseitigen GR und des lastseitigen Stromrichters WR in bekannter Weise von einer Steuereinrichtung ST.

Das Schienenfahrzeug TZ kann alternativ oder ergänzend auch mit einer Oberleitung oder einer Stromschiene, welche einen Gleichstrom mit einem Spannungsniveau von beispielsweise 3kV oder 1.5kV führt, über einen entsprechenden Stromabnehmer elektrisch verbunden werden. In diesem Fall kann der Gleichspannungszwischenkreis ZK der Traktionseinrichtung TE des Schienenfahrzeugs TZ direkt bzw. über einen Gleichspannungswandler gespeist werden.

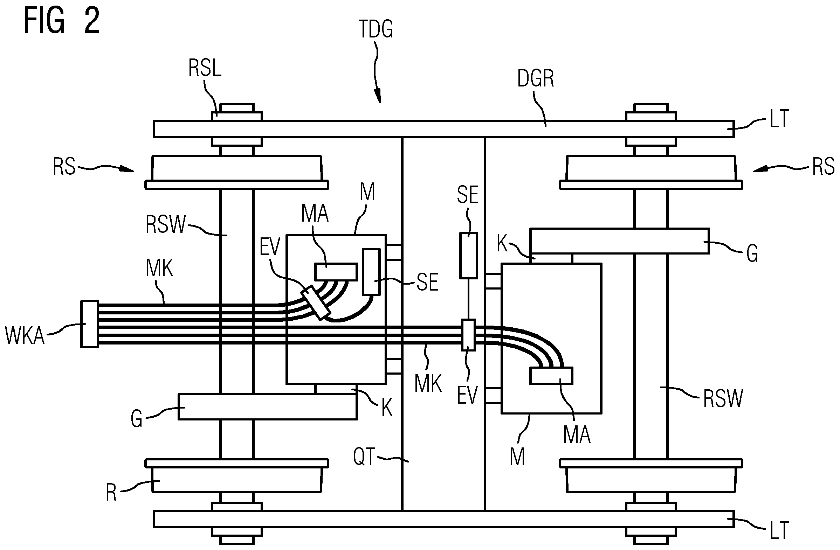

FIG 2 zeigt schematisch ein Triebdrehgestell TDG, wie es beispielhaft an dem Endwagen EW des Triebzugs TZ der FIG 1 angeordnet ist. Das Triebdrehgestell TDG weist beispielhaft einen Drehgestellrahmen DGR auf, welcher aus einem zentralen Querträger QT und zwei daran angeordneten Längsträgern LT besteht, wobei der Querträger QT ergänzend dazu dient, das Triebdrehgestell TDG drehbar und gefedert mit dem Wagenkasten WK des Endwagens EW mechanisch zu verbinden. An den Längsträgern LT sind zwei Radsätze RS angeordnet, wobei jeder Radsatz RS aus einer Radsatzwelle RSW sowie zwei drehstarr mit dieser verbundenen Rädern R besteht. Die Radsatzwellen RSW sind jeweils in Radsatzlagern RSL an den Längsträgern LT drehbar gelagert. Beispielhaft sind zwei Traktionsmotoren M an dem Querträger QT des Drehgestellrahmens DGR gelagert. Die Motorwelle des jeweiligen Traktionsmotors M, welche mit dem Rotor der Drehstrommaschine verbunden ist, ist über eine Kupplung K mit der Eingangswelle eines Getriebes G verbunden. Eine Ausgangswelle des Getriebes G stellt hingegen die Radsatzwelle RSW dar. Die beiden Traktionsmotoren M sind als Drehstrommaschinen ausgestaltet, deren drei Phasen der Statorwicklung über drei Motorkabel MK mit dem außerhalb des Triebdrehgestells TDG angeordneten Wechselrichter WR der Traktionseinrichtung TE verbunden sind. Die Motorkabel MK sind einerseits über Motoranschlüsse MA an dem jeweiligen Traktionsmotor M mit der Statorwicklung verbunden, andererseits beispielhaft an Wagenkastenanschlüssen WKA terminiert.

In dem Triebdrehgestell TDG sind zwei Energieversorgungsvorrichtungen EV sowie mit diesen verbundene Sensoreinrichtungen SE angeordnet. Die unterschiedlichen Orte der Anbringung der Energieversorgungsvorrichtungen EV und der Sensoreinrichtungen SE dient dabei einer beispielhaften Darstellung der vorteilhaften Flexibilität, welche insbesondere eine nachträgliche Installation von Sensoreinrichtungen in bereits im Betrieb befindliche Triebdrehgestelle TDG ermöglicht. So ist eine der Energieversorgungsvorrichtungen EV sowie die von dieser versorgte Sensoreinrichtung SE beispielhaft im Bereich des linken Traktionsmotors M angeordnet. Diese Sensoreinrichtung SE ist dabei an dem Gehäuse des linken Traktionsmotors M befestigt, während die Energieversorgungsvorrichtung EV im Bereich der Motoranschlüsse MA dieses Traktionsmotors M angeordnet ist und entsprechend einer Blockschelle die drei Motorkabel MK mechanisch miteinander verbindet, wobei die Energieversorgungsvorrichtung EV selbst nicht an dem Gehäuse des Traktionsmotors M befestigt ist. Die andere der Energieversorgungsvorrichtungen EV ist wie die von dieser versorgte Sensoreinrichtung SE hingegen beispielhaft an dem Querträger QT des Drehgestellrahmens DGR befestigt, wobei die Energieversorgungsvorrichtung EV ebenfalls entsprechend einer Blockschelle einer Befestigung bzw. Führung der drei Motorkabel MK zu den Motoranschlüssen MA des rechten Traktionsmotors M.

Die Sensoreinrichtungen SE umfassen eine jeweilige Anzahl Sensoren, welche jedoch nicht speziell dargestellt sind. Diese Sensoren dienen beispielhaft einer Erfassung des Zustands der in dem Triebdrehgestell angeordneten Komponenten, insbesondere der Traktionsmotoren, der Kupplungen, der Getriebe sowie der Radsatzlager. Abhängig von der Anordnung der Sensoreinrichtung SE können die Sensoren in dem Gehäuse der Sensoreinrichtung SE oder an den zu überwachenden Komponenten angeordnet und mit der Sensoreinrichtung SE über geeignete Leitungen verbunden sein.

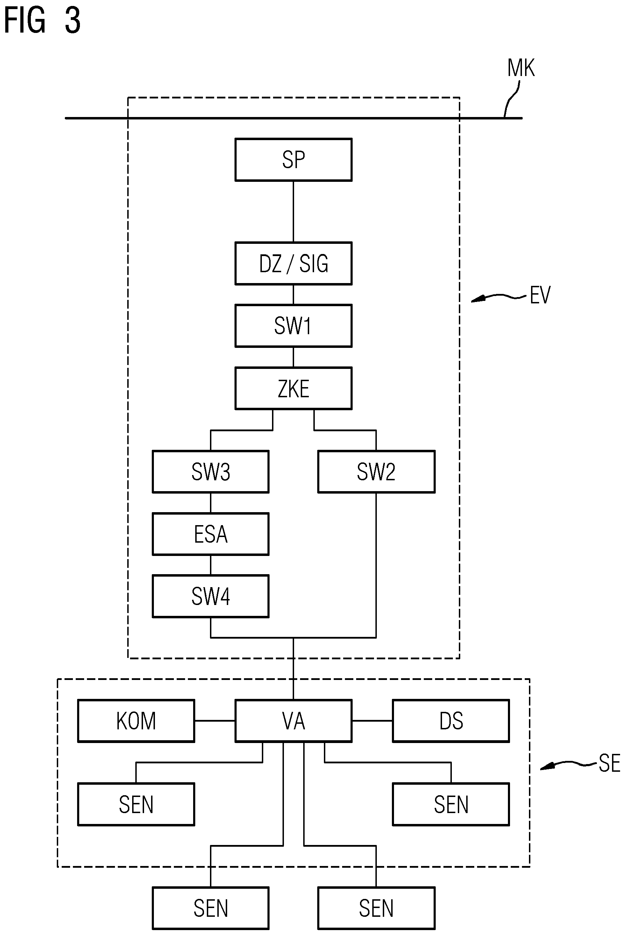

FIG 3 bis 5 zeigen beispielhaft Blockschaltbilder der Energieversorgungsvorrichtung EV sowie der Sensoreinrichtung SE. Dabei sind die in einem Gehäuse bzw. den mehreren Gehäusen der Energieversorgungsvorrichtung EV sowie die in dem Gehäuse der Sensoreinrichtung SE angeordneten elektrischen und elektronischen Komponenten dargestellt, wobei ein Gehäuse jeweils durch eine gestrichelte Linie schematisch dargestellt ist.

In der Energieversorgungsvorrichtung EV ist eine Spule SP induktiv mit einem Motorkabel MK gekoppelt, in welchem zumindest zeitweise ein Wechselstrom mit variablem Spannungsniveau und variabler Frequenz fließt. Die Spule SP kann mit einer Einrichtung zur Erfassung einer Drehzahl DZ und/oder einer Stromsignatur SIG verbunden sein, dessen bzw. deren Daten mittels einer nicht speziell dargestellten Leitung zu der Sensoreinrichtung SE übertragen werden. Die Spule SP ist ferner mit einem ersten Spannungswandler SW1, insbesondere einem aktiv gesteuerten Gleichrichter, verbunden, welcher den induktiv in der Spule SP generierten Wechselstrom mit ebenfalls variablen Spannungsniveau und variabler Frequenz in einen Gleichstrom mit einem möglichst konstanten Spannungsniveau wandelt. Ausgangsseitig speist der erste Spannungswandler SW einen Gleichspannungszwischenkreis ZKE, in welchem zumindest ein Zwischenkreiskondensator angeordnet ist, welcher einer Verringerung der Spannungswelligkeit dient.

Der Gleichspannungszwischenkreis ZKE speist wiederum einerseits einen zweiten Spannungswandler SW2, welcher als ein Tiefsetzsteller ausgestaltet ist und die an dem Gleichspannungszwischenkreis ZKE anliegende Gleichspannung in eine konstante Gleichspannung von beispielsweise 5V wandelt. Diese konstante Gleichspannung dient der Versorgung der Sensoreinrichtung SE bzw. der darin angeordneten nachfolgend näher erläuterten Komponenten. Der Gleichspannungszwischenkreis ZKE speist ferner einen dritten Spannungswandler SW3, welcher ebenfalls als ein Tiefsetzsteller ausgestaltet ist und die an dem Gleichspannungszwischenkreis ZKE anliegende Gleichspannung in eine Gleichspannung von beispielsweise 2.4V wandelt, mittels welcher eine Energiespeicheranordnung ESA geladen werden kann. Die Energiespeicheranordnung ESA umfasst dabei eine Anzahl Energiespeicher, beispielsweise Kondensatoren oder wiederausladbare Batterien. Die Spannung der Energiespeicheranordnung ESA bzw. der Energiespeicher wird mittels eines vierten Spannungswandlers SW4 wiederum auf eine Gleichspannung von 5V gewandelt. Die Energiespeicheranordnung ESA ermöglicht dabei, die Sensoreinrichtung SE auch in Zeiträumen mit elektrischer Energie zu versorgen, in denen in dem Motorkabel kein Strom fließt und somit die Spule SP keine Energie generiert, welche der Sensoreinrichtung SE über den zweiten Spannungswandler SW2 zugeführt werden kann.

In der Sensoreinrichtung SE ist eine Verarbeitungseinrichtung VA angeordnet, welche Daten und Signale von verschiedenen in und außerhalb des Gehäuses der Sensoreinrichtung SE angeordneten Sensoren SEN sowie von der Drehzahlerfassungseinrichtung DZ und/oder Stromsignaturerfassungseinrichtung SIG in der Energieversorgungsvorrichtung EV verarbeiten kann. Die Verarbeitungseinrichtung VA ist beispielsweise als ein oder mehrere Mikroprozessoren ausgestaltet und mit einen einer Datenspeichereinrichtung DS verbunden. Ferner ist die Verarbeitungseinrichtung VA mit einer Kommunikationseinrichtung KOM verbunden, mittels welcher von der Verarbeitungseinrichtung VA generierte Daten über eine Funkschnittstelle zu einer weiteren Einrichtung in dem Schienenfahrzeug TZ, beispielsweise der zentralen Steuereinrichtung ST, übertragen werden, in welcher die Daten weiterverarbeitet und ausgewertet werden. Die innerhalb und/oder außerhalb des Gehäuses der Sensoreinrichtung SE angeordneten Sensoren SEN umfassen beispielweise Temperatursensoren, Beschleunigungssensoren oder auch Vibrationssensoren.

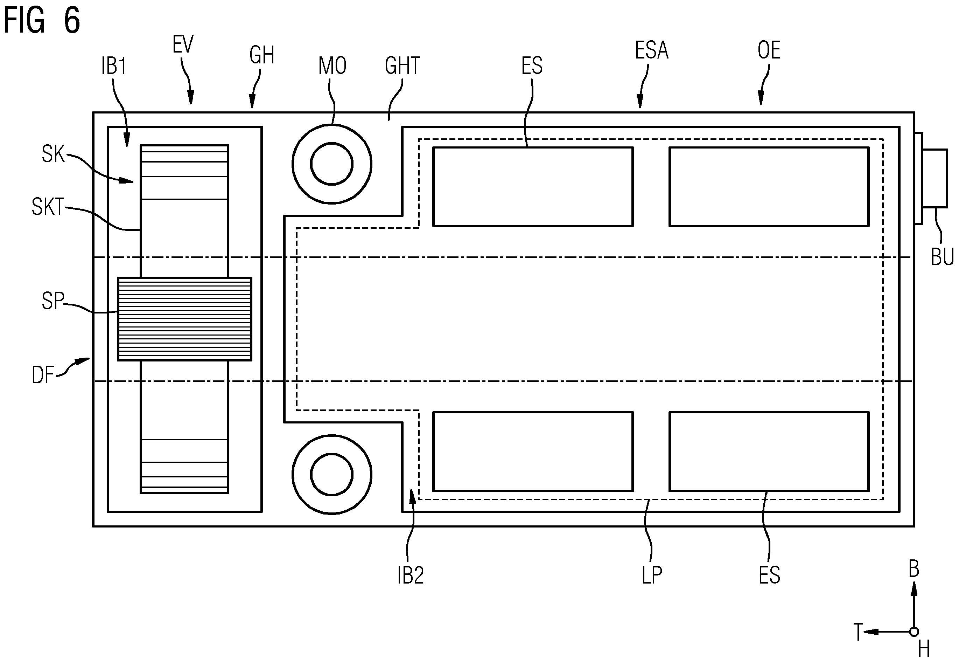

FIG 6 bis 8 zeigen schematisch den Aufbau der Energieversorgungseinrichtung EV gemäß einem ersten Beispiel aus unterschiedlichen Perspektiven. Die Energieversorgungsvorrichtung EV umfasst ein Gehäuse GH mit zwei mechanisch miteinander verbindbaren Gehäusehälften GHT, in bzw. zwischen denen ein Motorkabel MK anordenbar ist. Die FIG 6 zeigt dabei eine obere Gehäusehälfte GHT des Gehäuses GH in einer Draufsicht, wobei ein entfernter Deckel, welcher die Gehäusehälfte GHT bzw. die darin angeordneten Komponenten ansonsten vor Umwelteinflüssen schützt, einen Einblick in den Innenraum der Gehäusehälfte GHT gewährt. Die beiden Gehäusehälften GHT sowie die jeweiligen Deckel DL sind beispielsweise mittels eines Druckgussverfahrens aus einem Aluminiummaterial hergestellt und grundsätzlich wannenförmig ausgestaltet. Der Innenraum der Gehäusehälfte GHT ist beispielhaft in zwei Bereiche aufgeteilt, wobei in einem linken ersten Innenraumbereich IB1 ein Spulenkernteil SKT angeordnet ist, um welches eine Spule SP gewickelt ist. Dieser erste Innenraumbereich IB1 ist durch eine Gehäusewand von einem rechten zweiten Innenraumbereich IB2 getrennt.

In dem zweiten Innenraumbereich IB2 ist eine Leiterplatte LP angeordnet, auf der elektrische und elektronische Bauelemente, welche insbesondere die Funktionen der beschriebenen Spannungswandler SW1 bis SW4 verwirklichen, angeordnet sind. Sofern erforderlich, können alternativ auch mehrere, beispielsweise übereinander angeordnete Leiterplatten LP vorgesehen sein. Ferner sind insbesondere in den Randbereichen des zweiten Innenraumbereichs IB1 mehrere Energiespeicher ES einer Energiespeicheranordnung ESA beispielsweise in Form eines jeweiligen Kondensators oder einer jeweiligen wiederaufladbaren Batterie angeordnet. Die Leiterplatte LP ist mit Anschlüssen einer an der rechten Gehäusewand der Gehäusehälfte GHH angeordneten Buchse BU verbunden, an welcher ein mit einem korrespondierenden Stecker verbundenes elektrisches Kabel angeschlossen werden kann. Alternativ zu einem Anschluss an einer Buchse kann ein solches Kabel auch über eine Öffnung mit geeigneten Abdichtung in den Innenraum der Gehäusehälfte GHT geführt und dort beispielsweise mit elektrischen Anschlüssen an der Leiterplatte LP verbunden werden.

Im Bereich zwischen dem ersten IB1 und zweiten Innenraumbereich IB2 sind Montageöffnungen MO vorgesehen, welche die gesamte Höhe H der Gehäusehälfte GHT bzw. des Gehäuses GH durchdringen. Die Montageöffnungen MO dienen der Aufnahme von beispielsweise Sechskant- oder Zylinderschrauben, mittels welcher die beiden Gehäusehälften GHT verspannt sowie gegebenenfalls ergänzend an einer Komponente des Schienenfahrzeugs befestigt werden.

Vorzugsweise weisen die Montageöffnungen MO einen Abstand in Richtung der Breite B zueinander auf, welcher einem entsprechenden Abstand einer durch die Energieversorgungsvorrichtung EV zu ersetzenden Blockschelle entspricht.

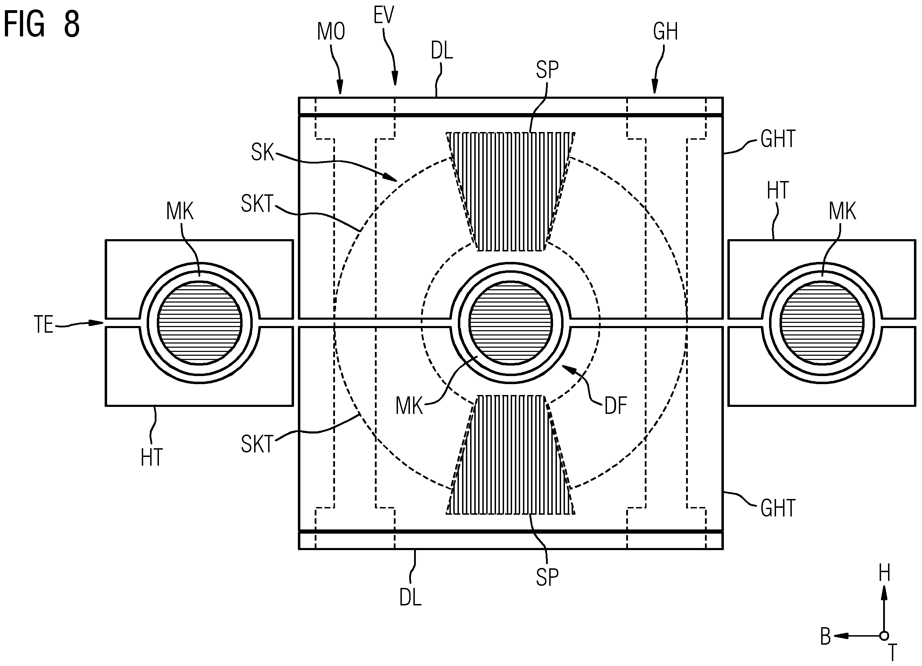

Mittig durch die Gehäusehälfte GHT bzw. durch das Gehäuse GH und über die gesamte Tiefe des Gehäuses GH verläuft eine Durchführung DF, in welchem ein Motorkabel MK anordenbar ist. Diese Durchführung DF bzw. deren größte Breite ist durch strichpunktierte Linien beispielhaft angegeben. Wie in FIG 8 ergänzend dargestellt, ist die Durchführung DF vorzugsweise zylindrisch bzw. weitgehend zylindrisch ausgestaltet, sodass ein Motorkabel MK mit einem kreisrunden bzw. nahezu kreisrunden Querschnitt darin angeordnet und befestigt werden kann. Ein Motorkabel MK umfasst in bekannter Weise eine oder mehrere Leitungen vorzugsweise aus einem Kupfermaterial sowie eine Ummantelung aus einem elektrisch isolierenden Kunststoffmaterial.

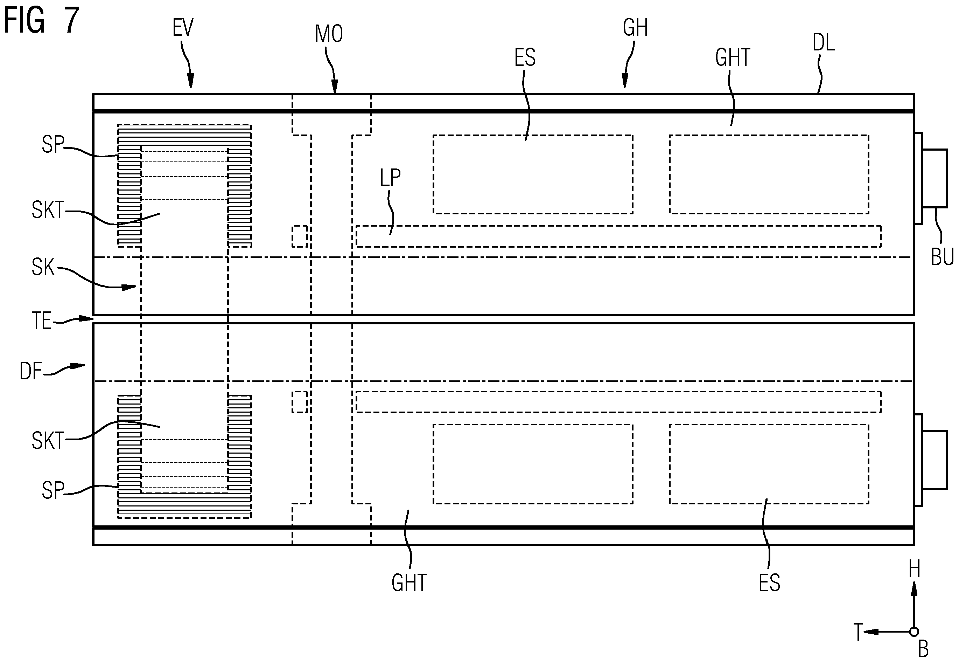

FIG 7 zeigt schematisch eine Seitenansicht der beiden übereinander angeordneten Gehäusehälften GHT, welche zusammen das Gehäuse GH der Energieversorgungsvorrichtung EV bilden. Dabei sind die Gehäusehälften GHT in einem Zustand dargestellt, in welchem sie noch nicht zusammengefügt sind, sondern im Bereich einer Trennebene TE, an welcher die Unterseiten der Gehäusehälften GHT sich gegenüberliegen, noch einen geringen Abstand zueinander aufweisen. Nach dem Zusammenfügen der Gehäusehälften GHT beispielsweise durch Verspannen oder Befestigung an einer Komponente sollten zumindest die Querschnittsflächen der Spulenkernteile SKT direkt aneinandergrenzen. Die Trennebene TE verläuft beispielhaft parallel bzw. weitgehend parallel zu einer Hauptachse des in der Durchführung DF angeordneten Motorkabels MK. Mit dem Zusammenfügen der beiden Gehäusehälften GHT wird das Motorkabel MK innerhalb der Durchführung ergänzend verklemmt, um Bewegungen des Motorkabels MK in der Durchführung DF oder zumindest in dessen Endbereichen und damit mögliche Beschädigungen der Kabelummantelung zu verhindern.

Aus der Darstellung ist erkennbar, dass die beiden Gehäusehälften GHT grundsätzlich identisch ausgestaltet sein können bzw. einen symmetrischen Aufbau aufweisen können. Insbesondere wenn die für den Betrieb der Sensoreinrichtung SE benötigte elektrische Energie nur gering ist, kann die Anordnung einer Spule sowie der weiteren Komponenten in einer der beiden Gehäusehälften GHT jedoch bereits ausreichend sein, während in der anderen Gehäusehälfte GHT ausschließlich der andere Spulenkernteil SKT angeordnet ist, um einen vollständigen Spulenkern SK zu bilden. Bei der in FIG 7 dargestellten Ausgestaltung mit Spulen SP und weiteren Komponenten in beiden Gehäusehälften GHT können diese somit beispielsweise parallel eine einzige Sensoreinrichtung oder auch zwei voneinander unabhängige Sensoreinrichtungen versorgen, wobei in letzterem Fall ein jeweiliges elektrisches Kabel von einer Gehäusehälfte GHT bzw. deren Buchse BU zu der jeweiligen Sensoreinrichtung geführt ist.

Wie aus der Darstellung weiterhin hervorgeht, sind die Leiterplatten LP und jeweiligen Energiespeicher ES jeweils oberhalb der die gesamte Tiefe T des Gehäuses GH durchdringenden Durchführung DF angeordnet. Sofern es der verbleibende Raum seitlich der Durchführung DF, d.h. in Richtung der Breite B des Gehäuses GH zulässt, können in diesen Bereichen beispielsweise weitere Energiespeicher ES angeordnet werden, um die Speicherkapazität der Energiespeicheranordnung ESA zu erhöhen.

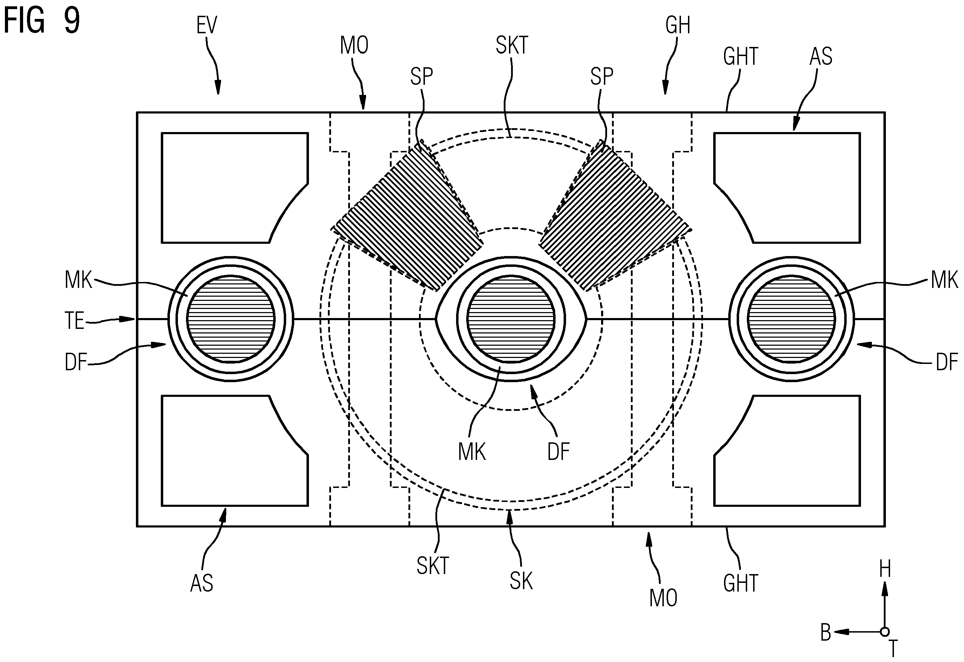

FIG 8 zeigt eine Frontansicht des Gehäuses GH bzw. der beiden Gehäusehälften GHT. Wie aus dieser Darstellung ergänzend hervorgeht, bilden die beiden Gehäusehälften GHT durch nutenförmige Ausgestaltungen ihrer einander gegenüberliegenden Unterseiten eine zylindrische bzw. weitgehend zylindrische Durchführung DF aus, welche ein Motorkabel MK konzentrisch umschließt. Die Gehäusehälften GHT werden dabei im Bereich der Trennebene TE soweit zusammengeführt, dass die Spulenkernteile SKT zusammen einen geschlossenen Spulenkern SK ausbilden. Die beiden Spulen SP sind jeweils, in der Richtung der Höhe H, im oberen Bereich des Spulenkerns SK angeordnet, wobei diese in gleicher Weise auch an einer anderen geeigneten Stelle des Umfangs des Spulenkernteils SKT in der Gehäusehälfte GHT angeordnet sein können, wie beispielhaft in FIG 9 dargestellt ist. Ferner können, wie ebenfalls in FIG 9 beispielhaft dargestellt, auch mehrere Spulen SP in einer Gehäusehälfte GHT bzw. an einem Spulenkernteil SKT angeordnet sein, beispielsweise um die mittels der Spulen induktiv generierte elektrische Energie zu erhöhen.

FIG 8 zeigt ferner, dass seitlich der Gehäusehälften GHT beispielhaft ergänzende Halterungen HT vorgesehen sind, mittels welchen die beiden weiteren zum Traktionsmotor M geführten Motorkabel MK entsprechend dem Gehäuse GH befestigt bzw. geführt werden. Diese Halterungen HT werden beispielsweise mit den Gehäusehälften GHT verschraubt, können jedoch auch als integrale Bestandteile der Gehäusehälften GHT ausgestaltet sein.

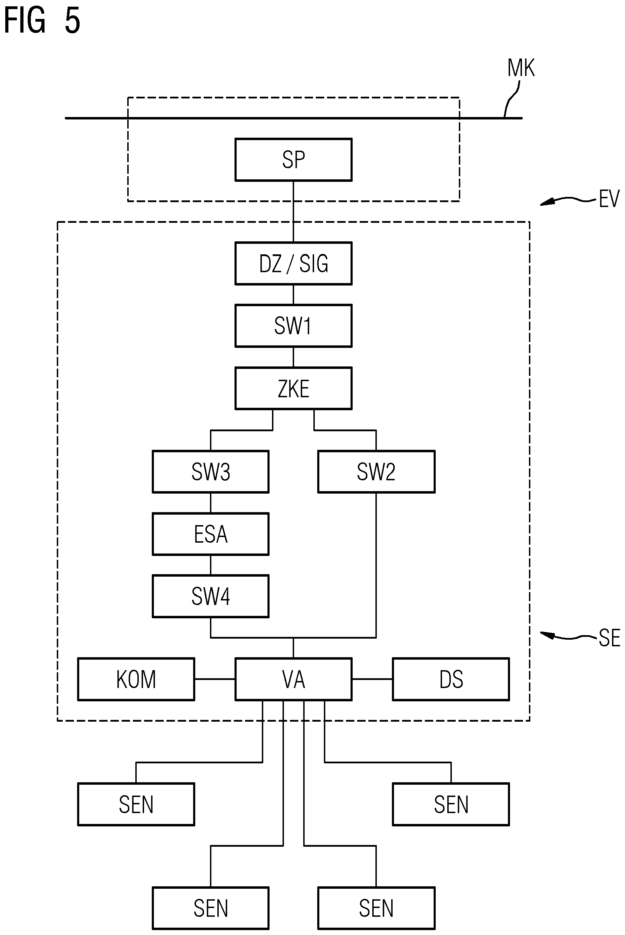

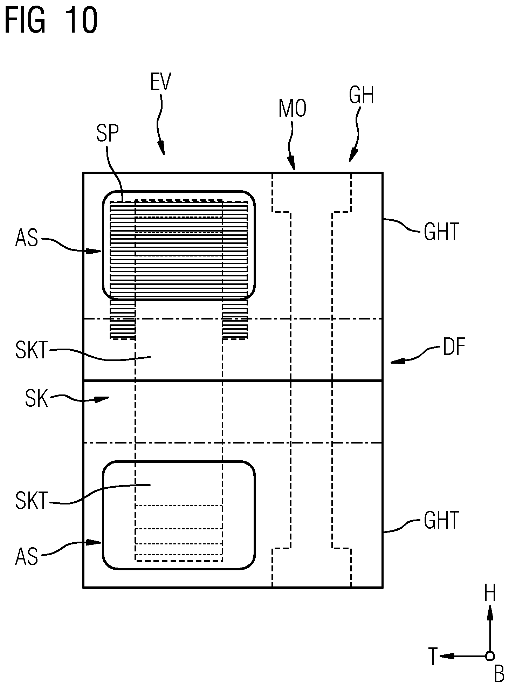

FIG 9 und 10 zeigen schematisch den Aufbau der Energieversorgungseinrichtung EV gemäß einem zweiten Beispiel in einer Frontansicht bzw. einer Seitenansicht. Im Unterschied zum ersten Beispiel der FIG 6 bis 8 sind in dem Gehäuse GH ausschließlich der Spulenkern SK sowie zwei um den oberen Spulenkernteil SKT gewickelte Spulen SP angeordnet, wobei alternativ auch lediglich eine Spule um den Spulenkern gewickelt sein kann. Die beiden Spulen SP sind zudem in einem Winkel zu der Richtung der Höhe H bzw. der Breite B angeordnet, wodurch die Bauhöhe des Gehäuses GH bzw. der Gehäusehälfte GHT, in der die Spulen SP angeordnet sind, verringert werden kann. Ausgehend von den Spulen SP sind nicht speziell dargestellte elektrische Leitungen bzw. ein elektrisches Kabel aus dem Gehäuse GH heraus und zu einem weiteren Gehäuse geführt, in welchem die vorstehend beschriebenen weiteren Komponenten der Energieversorgungsvorrichtung EV angeordnet sind, wobei dieses weitere Gehäuse beispielsweise entsprechend der FIG 5 ein Gehäuse der Sensoreinrichtung SE ist.

Neben einer ortsfesten Anordnung des Spulenkerns SK an einem Motorkabel MK sowie dessen mechanischen Schutz dient das Gehäuse GH ferner der gemeinsamen Führung bzw. Befestigung der beiden weiteren Motorkabel MK. Damit kommt dieser Teil der Energieversorgungseinrichtung EV der grundsätzlichen Funktion einer Halte- bzw. Blockschelle der Führung und/oder Befestigung von Motorkabeln MK sowie deren Ausmaßen sehr nahe.

Das Gehäuse GH gemäß dem zweiten Beispiel besteht wiederum aus zwei zusammenfügbaren Gehäusehälften GHT, welche die drei Motorkabel MK in einer jeweiligen Durchführung DF über eine Teillänge entsprechend der Tiefe T des Gehäuses GH umschließen. Die zentrale Durchführung DF entsteht in diesem Beispiel aus einer jeweiligen bogenförmigen bzw. elliptischen Nut an den Unterseiten der beiden Gehäusehälften GHT. Die Unterseiten sind dabei vorzugsweise jeweils geschlossen bzw. nur durch Montageöffnungen MO unterbrochen ausgestaltet. Die Stirnseiten sowie Seitenflächen der Gehäusehälften GHT hingegen weisen beispielhaft Aussparungen AS auf, welche sich entsprechend der Durchführung DF über die gesamte Tiefe T bzw. Breite B erstrecken, sodass die Innenräume der Gehäusehälften GHT jeweils nicht vollständig geschlossen sind. In gleicher Weise können entsprechende Aussparungen ebenfalls im Bereich der Oberseiten der Gehäusehälften GHT vorgesehen sein. Das Gehäuse GH ist somit in der Art eines Käfigs ausgestaltet, welcher um den Spulenkern SK mit Spulen SP und eine Teillänge des oder der Motorkabel MK angeordnet ist.

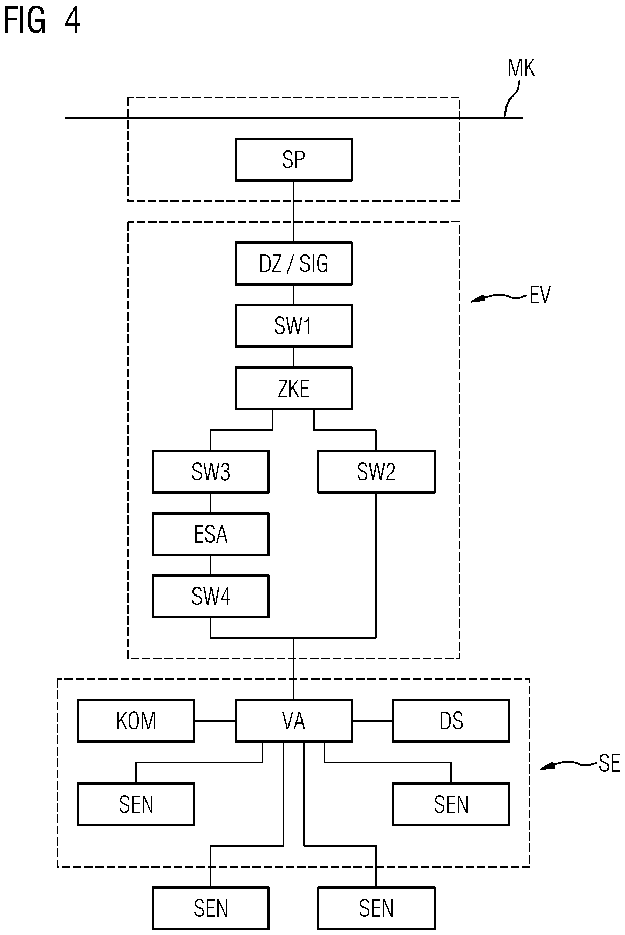

Eine solche, insbesondere leichtere, offene bzw. käfigartige Gestaltung des Gehäuses GH wird durch Anordnung der weiteren, gegenüber Umwelteinflüssen empfindlicheren elektronischen Bauelemente der Energieversorgungsvorrichtung EV in einem anderen, entfernt angeordneten Gehäuse beispielsweise entsprechend den FIG 4 oder 5 ermöglicht. Das Gehäuse GH dient somit ausschließlich einer Befestigung bzw. Führung von Motorkabeln MK entsprechend einer bekannten Halte- bzw. Blockschelle sowie ergänzend einer ortsfesten Lagerung und einem mechanischen Schutz von Spulenkern SK und Spulen SP vor Umwelteinflüssen. Der Spulenkern SK und die eine oder mehreren Spulen SP sollten dabei vorzugsweise vergossen sein, um einen ergänzenden Schutz dieser elektrischen Komponenten vor insbesondere Staub und Feuchtigkeit zu gewährleisten.

### Bezugszeichen

- AS: Aussparung
- B: Breite
- BU: Buchse
- DF: Durchführung
- DGR: Drehgestellrahmen
- DL: Deckel
- DS: Speichereinrichtung
- DZ: Drehzahlerfassungseinrichtung
- ES: Energiespeicher
- ESA: Energiespeicheranordnung
- EV: Energieversorgungsvorrichtung
- EW: Endwagen
- FR: Fahrtrichtung
- G: Getriebe
- GH: Gehäuse
- GHT: Gehäuseteil
- GR: Gleichrichter
- H: Höhe
- HT: Halterung
- IB1,IB2: Innenraumbereich
- K: Kupplung
- KOM: Kommunikationseinrichtung
- LDG: Laufdrehgestell
- LP: Leiterplatte
- LT: Längsträger
- M: Motor
- MA: Motoranschlüsse
- MK: Motorkabel
- MO: Montageöffnung
- MW: Mittelwagen
- OE: Öffnung
- PAN: Stromabnehmer
- QT: Querträger
- R: Rad
- RS: Radsatz
- RSL: Radsatzlager
- RSW: Radsatzwelle
- SE: Sensoreinrichtung
- SEN: Sensor
- SIG: Stromsignaturerfassungseinrichtung
- SK: Spulenkern
- SKT: Spulenkernteil
- SP: Spule
- ST: Steuereinrichtung
- SW1-SW4: Spannungswandler
- T: Tiefe
- TDG: Triebdrehgestell
- TE: Trennebene
- TF: Transformator
- TZ: Triebzug
- VA: Verarbeitungseinrichtung
- WK: Wagenkasten
- WKA: Wagenkastenanschlüsse
- WR: Wechselrichter
- ZK: Gleichspannungszwischenkreis
- ZKE: Gleichspannungszwischenkreis

## Patentansprüche

1. Vorrichtung zur Energieversorgung (EV) einer Sensoreinrichtung (SE) in einem Schienenfahrzeug (TZ), aufweisend zumindest:
- ein Gehäuse (GH), in welchem zumindest eine Spule (SP) angeordnet ist, welche mit einem einen Wechselstrom führenden Motorkabel (MK) induktiv koppelbar ist, wobei das Gehäuse (GH) ausgestaltet ist, eine Teillänge des Motorkabels (MK) zu umschließen, und wobei die zumindest eine Spule (SP) um einen ringförmigen Spulenkern (SK) gewickelt ist, welcher das Motorkabel (MK) konzentrisch oder im Wesentlichen konzentrisch umschließt,
- wobei das Gehäuse (GH) mehrteilig ausgeführt ist und zumindest ein erstes und ein zweites Gehäuseteil (GHT) aufweist, und
- wobei der ringförmige Spulenkern (SK) mehrteilig ausgeführt ist und zumindest ein erster Spulenkernteil (SKT) in dem ersten Gehäuseteil (GHT) und zumindest ein zweiter Spulenkernteil (SKT) in dem zweiten Gehäuseteil (GHT) angeordnet sind,
**dadurch gekennzeichnet, dass**
- das Gehäuse (GH) ferner ausgestaltet ist, das Motorkabel (MK) an einer Komponente des Schienenfahrzeugs (TZ) mechanisch zu befestigen und/oder das Motorkabel (MK) mit zumindest einem weiteren Motorkabel (MK) mechanisch zu verbinden,
- wobei in zumindest einem der Gehäuseteile (GHT) oder in einem weiteren Gehäuse zumindest ein erster Spannungswandler (SW1), zumindest ein Gleichspannungszwischenkreis (ZKE) mit einem Zwischenkreiskondensator, zumindest ein zweiter Spannungswandler (SW2), zumindest ein dritter Spannungswandler (SW3), zumindest eine Energiespeicheranordnung (ESA) sowie zumindest ein vierter Spannungswandler (SW4) angeordnet sind,
- wobei der erste Spannungswandler (SW1) eingangsseitig mit der zumindest einen Spule (SP) und ausgangsseitig mit dem Gleichspannungszwischenkreis (ZKE) verbunden ist, und wobei der erste Spannungswandler (SW1) ausgestaltet ist, eine Wechselspannung der zumindest einen Spule (SP) in eine Gleichspannung des Gleichspannungszwischenkreises (ZKE) zu wandeln,
- wobei der zweite Spannungswandler (SW2) eingangsseitig mit dem Gleichspannungszwischenkreis (ZKE) und ausgangsseitig mit der Sensoreinrichtung (SE) verbunden ist, und wobei der zweite Spannungswandler (SW2) ausgestaltet ist, die Gleichspannung des Gleichspannungszwischenkreises (ZKE) in eine Speise-Gleichspannung zu wandeln,
- wobei der dritte Spannungswandler (SW3) eingangsseitig mit dem Gleichspannungszwischenkreis (ZKE) und ausgangsseitig mit der Energiespeicheranordnung (ESA) verbunden ist, und wobei der dritte Spannungswandler (SW3) ausgestaltet ist, die Gleichspannung des Gleichspannungszwischenkreises (ZKE) in eine Ladegleichspannung für die Energiespeicheranordnung (ESA) zu wandeln, und
- wobei der vierte Spannungswandler (SW4) eingangsseitig mit der Energiespeicheranordnung (ESA) und ausgangsseitig mit der Sensoreinrichtung (SE) verbunden ist, und wobei der vierte Spannungswandler (SW4) ausgestaltet ist, eine Gleichspannung der Energiespeicheranordnung (ESA) in die Speise-Gleichspannung zu wandeln.

2. Vorrichtung nach Patentanspruch 1, **dadurch gekennzeichnet, dass**
zumindest das Gehäuseteil (GHT), in welchem die zumindest eine Spule (SP) angeordnet ist, über zumindest eine verschließbare Öffnung (OE) an einer Oberseite und/oder an einer Stirnseite zugänglich ist.

3. Vorrichtung nach Patentanspruch 1 oder 2, **dadurch gekennzeichnet, dass**
zumindest zwei Spulen (SP) in dem Gehäuse (GH) angeordnet sind, wobei die zumindest zwei Spulen (SP) um einen gleichen Spulenkernteil oder um unterschiedliche Spulenkernteile (SKT) gewickelt sind.

4. Vorrichtung nach einem der vorstehenden Patentansprüche, **dadurch gekennzeichnet, dass**
in zumindest dem Gehäuseteil (GHT), in welchem die zumindest eine Spule (SP) angeordnet ist, ferner eine Einrichtung zur Erfassung einer Drehzahl (DZ) und/oder eine Einrichtung zur Erfassung einer Stromsignatur (SIG) angeordnet ist, welche mit der Spule (SP) verbunden sind.

5. Schienenfahrzeug (TZ), aufweisend:
- zumindest eine Traktionseinrichtung (TE), wobei die Traktionseinrichtung (TE) zumindest einen Traktionsmotor (M) sowie einen den zumindest einen Traktionsmotor (M) speisenden Stromrichter (WR) umfasst, wobei Stromrichter (WR) und Traktionsmotor (M) mittels einer Mehrzahl Motorkabel (MK) verbunden sind, und
- zumindest eine Sensoreinrichtung (SE) mit einer Anzahl Sensoren (SEN), wobei die Sensoren (SEN) einer Erfassung eines Zustands zumindest einer Komponente des Schienenfahrzeugs dienen,
**gekennzeichnet durch**
- eine Vorrichtung (VE) gemäß einem der Patentansprüche 1 bis 4 zur Versorgung der zumindest einen Sensoreinrichtung (SE) mit elektrischer Energie.

6. Schienenfahrzeug (TZ) nach Patentanspruch 5, **dadurch gekennzeichnet, dass**
eine Komponente, an welcher das Gehäuse (GH) der Vorrichtung (EV) befestigbar ist, ein Traktionsmotor (M), ein Drehgestell (DG) oder ein Wagenkasten (WK) des Schienenfahrzeugs (TZ) ist.

## Claims

1. Device for supplying energy (EV) to a sensor arrangement (SE) in a rail vehicle (TZ),
said device having at least:
- one housing (GH) in which there is arranged at least one coil (SP) which can be inductively coupled to a motor cable (MK) carrying an alternating current, wherein the housing (GH) is embodied to enclose a partial length of the motor cable (MK), and wherein the at least one coil (SP) is wound around an annular coil core (SK) which surrounds the motor cable (MK) concentrically or substantially concentrically,
- wherein the housing (GH) is implemented in multiple parts and has at least one first and one second housing part (GHT), and
- wherein the annular coil core (SK) is implemented in multiple parts and at least one first coil core part (SKT) is arranged in the first housing part (GHT) and at least one second coil core part (SKT) is arranged in the second housing part (GHT),
**characterised in that**
- the housing (GH) is further embodied to mechanically secure the motor cable (MK) to a component of the rail vehicle (TZ) and/or to mechanically connect the motor cable (MK) to at least one further motor cable (MK),
- wherein at least one first voltage converter (SW1), at least one DC intermediate circuit (ZKE) having a DC link capacitor, at least one second voltage converter (SW2), at least one third voltage converter (SW3), at least one energy storage arrangement (ESA) and at least one fourth voltage converter (SW4) are arranged in at least one of the housing parts (GHT) or in a further housing,
- wherein the first voltage converter (SW1) is connected to the at least one coil (SP) on the input side and to the DC intermediate circuit (ZKE) on the output side, and wherein the first voltage converter (SW1) is embodied to convert an alternating voltage of the at least one coil (SP) into a direct-current voltage of the DC intermediate circuit (ZKE),
- wherein the second voltage converter (SW2) is connected to the DC intermediate circuit (ZKE) on the input side and to the sensor arrangement (SE) on the output side, and wherein the second voltage converter (SW2) is embodied to convert the direct-current voltage of the DC intermediate circuit (ZKE) into a feeder direct-current voltage,
- wherein the third voltage converter (SW3) is connected to the DC intermediate circuit (ZKE) on the input side and to the energy storage arrangement (ESA) on the output side, and wherein the third voltage converter (SW3) is embodied to convert the direct-current voltage of the DC intermediate circuit (ZKE) into a charging direct-current voltage for the energy storage arrangement (ESA), and
- wherein the fourth voltage converter (SW4) is connected to the energy storage arrangement (ESA) on the input side and to the sensor arrangement (SE) on the output side, and wherein the fourth voltage converter (SW4) is embodied to convert a direct-current voltage of the energy storage arrangement (ESA) into the feeder direct-current voltage.

2. Device according to claim 1, **characterised in that**
at least the housing part (GHT) in which the at least one coil (SP) is arranged is accessible via at least one closable opening (OE) on a top side and/or on a front face.

3. Device according to claim 1 or 2, **characterised in that** at least two coils (SP) are arranged in the housing (GH), wherein the at least two coils (SP) are wound around an identical coil core part or around different coil core parts (SKT).

4. Device according to one of the preceding claims,
**characterised in that**
a device for measuring a rotational speed (DZ) and/or a device for detecting a current signature (SIG), which are connected to the coil (SP), are also arranged in at least the housing part (GHT) in which the at least one coil (SP) is arranged.

5. Rail vehicle (TZ) having:
- at least one traction device (TE), wherein the traction device (TE) comprises at least one traction motor (M) as well as a current converter (WR) feeding the at least one traction motor (M), wherein current converter (WR) and traction motor (M) are connected by means of a plurality of motor cables (MK), and
- at least one sensor arrangement (SE) having a number of sensors (SEN), wherein the sensors (SEN) serve for detecting a condition of at least one component of the rail vehicle, **characterised by**
- a device (VE) according to one of claims 1 to 4 for supplying the at least one sensor arrangement (SE) with electrical energy.

6. Rail vehicle (TZ) according to claim 5, **characterised in that**
a component to which the housing (GH) of the device (EV) can be fixed is a traction motor (M), a bogie (DG) or a car body (WK) of the rail vehicle (TZ).

## Revendications

1. Dispositif d'alimentation (EV) en énergie d'un dispositif (SE) capteur dans un véhicule (TZ) ferroviaire, comportant au moins :
- un boîtier (GH), dans lequel est disposé au moins une bobine (SP), qui peut être couplée inductivement avec un câble (MK) de moteur conduisant du courant alternatif, dans lequel le boîtier (GH) est conformé pour entourer une longueur partielle du câble (MK) de moteur, et dans lequel la au moins une bobine (SP) est enroulée autour d'un noyau (SK) de bobine annulaire, qui entoure concentriquement ou sensiblement concentriquement le câble (MK) de moteur,
- dans lequel le boîtier (GH) est réalisé en plusieurs parties et a au moins une première et une deuxième parties (GHT) de boîtier, et
- dans lequel le noyau (SK) de bobine annulaire est réalisé en plusieurs parties et au moins une première partie (SKT) du noyau de bobine est disposée dans la première partie (GHT) du boîtier et au moins une deuxième partie (SKT) du noyau de bobine est disposée dans la deuxième partie (GHT) du boîtier,
**caractérisé en ce que**
- le boîtier (GH) est constitué en outre pour fixer mécaniquement le câble (MK) de moteur à un composant du véhicule (TZ) ferroviaire et/ou pour relier mécaniquement le câble (MK) de moteur à au moins un autre câble (MK) de moteur,
- dans lequel, dans au moins l'une des parties (GHT) du boîtier ou dans un autre boîtier, sont disposés au moins un premier transformateur (SW1) de tension, au moins un circuit (ZKE) intermédiaire à tension continue à condensateur de circuit intermédiaire, au moins un deuxième transformateur (SW2) de tension, au moins un troisième transformateur (SW3) de tension, au moins un agencement (ESA) d'accumulation d'énergie ainsi qu'au moins un quatrième transformateur (SW4) de tension,
- dans lequel le premier transformateur (SW1) de tension est connecté du côté de l'entrée à la au moins une bobine (SP) et du côté de la sortie au circuit (ZKE) intermédiaire à tension continue, et dans lequel le premier transformateur (SW1) de tension est conformé pour transformer une tension alternative de la au moins une bobine (SP) en une tension continue du circuit (ZKE) intermédiaire à tension continue,
- dans lequel le deuxième transformateur (SW2) de tension est connecté du côté de l'entrée au circuit (ZKE) intermédiaire à tension continue et du côté de la sortie au dispositif (SE) capteur, et dans lequel le deuxième transformateur (SW2) de tension est conformé pour transformer la tension continue du circuit (ZKE) intermédiaire à tension continue en une tension continue d'alimentation,
- dans lequel le troisième transformateur (SW3) de tension est connecté du côté de l'entrée au circuit (ZKE) intermédiaire à tension continue et du côté de la sortie à l'agencement (ESA) d'accumulation d'énergie, et dans lequel le troisième transformateur (SW3) de tension est conformé pour transformer la tension continue du circuit (ZKE) intermédiaire à tension continue en une tension continue de charge pour l'agencement (ESA) d'accumulation d'énergie, et
- dans lequel le quatrième transformateur (SW4) de tension est connecté du côté de l'entrée à l'agencement (ESA) d'accumulation d'énergie et du côté de la sortie au dispositif (SE) capteur, et dans lequel le quatrième transformateur (SW4) de tension est conformé pour transformer une tension continue de l'agencement (ESA) d'accumulation d'énergie en la tension continue d'alimentation.

2. Dispositif suivant la revendication 1, **caractérisé en ce que** au moins la partie (GHT) du boîtier, dans laquelle la au moins une bobine (SP) est disposée, est accessible à un côté supérieur et/ou à un côté inférieur en passant par au moins une ouverture (OE) pouvant être fermée.

3. Dispositif suivant la revendication 1 ou 2, **caractérisé en ce qu'**
au moins deux bobines (SP) sont disposées dans le boîtier (GH), dans lequel les au moins deux bobines (SP) sont enroulées autour d'une même partie de noyau de bobine ou autour de parties (SKT) de noyau de bobine différentes.

4. Dispositif suivant l'une des revendications précédentes, **caractérisé en ce que**
dans au moins la partie (GHT) de boîtier, dans laquelle la au moins une bobine (SP) est disposée, est disposé en outre un dispositif de détection d'une vitesse (DZ) de rotation et/ou un dispositif de détection d'une signature (SIG) de courant, qui sont connectés à la bobine (SP).

5. Véhicule (TZ) ferroviaire, comportant :
- au moins un dispositif (TE) de traction, dans lequel le dispositif (TE) de traction comprend au moins un moteur (M) de traction ainsi qu'un convertisseur (WR) alimentant le au moins un moteur (M) de traction, dans lequel le convertisseur (WR) et le moteur (M) de traction sont connectés au moyen d'une pluralité de câbles (MK) de moteur, et
- au moins un dispositif (SE) capteur ayant un certain nombre de capteurs (SEN), dans lequel les capteurs (SEN) servent à détecter un état d'au moins un composant du véhicule ferroviaire, **caractérisé par**
- un dispositif (VE) suivant l'une des revendications 1 à 4 d'alimentation du au moins un dispositif (SE) capteur en énergie électrique.

6. Véhicule (TZ) ferroviaire suivant la revendication 5, **caractérisé en ce que**
un composant, sur lequel le boîtier (GH) du dispositif (EV) peut être fixé, est un moteur (M) de traction, un boggie (DG) ou une caisse (WK) du véhicule (TZ) ferroviaire.
